(19) Europäisches Patentamt
European Patent Office
Office européen des brevets

(11) **EP 4 283 418 B1**

(12) **EUROPEAN PATENT SPECIFICATION**

(45) Date of publication and mention
of the grant of the patent:
**25.12.2024 Bulletin 2024/52**

(21) Application number: **21934968.5**

(22) Date of filing: **31.03.2021**

(51) International Patent Classification (IPC):
***G05B 19/18*** *(2006.01)*      ***G05B 19/4063*** *(2006.01)*

(52) Cooperative Patent Classification (CPC):
**G05B 19/4063;** G05B 2219/33299;
G05B 2219/34465; G05B 2219/34477

(86) International application number:
**PCT/JP2021/014008**

(87) International publication number:
**WO 2022/208803 (06.10.2022 Gazette 2022/40)**

(54) **DIAGNOSTIC SYSTEM FOR MACHINE TOOL, AND DIAGNOSTIC METHOD FOR MACHINE TOOL**

DIAGNOSESYSTEM FÜR WERKZEUGMASCHINE UND DIAGNOSEVERFAHREN FÜR WERKZEUGMASCHINE

SYSTÈME DE DIAGNOSTIC POUR MACHINE-OUTIL ET PROCÉDÉ DE DIAGNOSTIC POUR MACHINE-OUTIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2023 Bulletin 2023/48**

(73) Proprietor: **Yamazaki Mazak Corporation**
**Niwa-gun, Aichi 480-0197 (JP)**

(72) Inventors:
• **HORIBE, Kazuya**
**Niwa-gun, Aichi 480-0197 (JP)**
• **AOYAMA, Osamu**
**Niwa-gun, Aichi 480-0197 (JP)**
• **SAGA, Yukihiko**
**Niwa-gun, Aichi 480-0197 (JP)**
• **YAMAMOTO, Hiromasa**
**Niwa-gun, Aichi 480-0197 (JP)**

• **PARK, Hyunkoo**
**Niwa-gun, Aichi 480-0197 (JP)**
• **KITAYAMA, Jumpei**
**Niwa-gun, Aichi 480-0197 (JP)**

(74) Representative: **TBK**
**Bavariaring 4-6**
**80336 München (DE)**

(56) References cited:
JP-A- 2004 192 326   JP-A- 2004 265 009
JP-A- 2017 032 520   JP-A- 2017 219 469
JP-A- 2018 155 675   JP-A- 2018 179 735
JP-A- 2020 041 849   JP-A- S63 297 813

• **No further relevant documents disclosed**

**Description**

Technical Field

The present invention relates to a diagnosis system for a machine tool, and a method of diagnosing a machine tool.

Background Art

Systems to detect defects of machine tools using external remote monitor apparatuses have become widely used (for example, document JP 2004- 265 009 A). In document JP 2004- 265 009 A, a machine tool itself performs a rough diagnosis on a failure in the machine tool. If an abnormality is identified as a result of the rough diagnosis, detailed diagnosis means at a remote location performs a detailed diagnosis on the abnormality. On the other hand, such systems have been conventionally known that an abnormality diagnosis device mounted on a machine tool diagnoses an abnormality in the machine tool (for example, document JP 2006- 234 784 A). In document JP 2006- 234 784 A, a vibration sensor is mounted on a bearing of the machine tool, and a particular frequency component value is detected from a signal from the vibration sensor. Then, based on the component value, a damage to the bearing is determined.

Document JP 2018- 179 735 A discloses an abnormality diagnostic method and an abnormality diagnostic device. The abnormality diagnostic device includes: a rotation sensor for detecting a rotation speed of a rotary component; a vibration sensor for detecting vibration generated by the rotary component; a rotation analysis part for calculating, for each of plural elements of the rotary component, a theoretical frequency due to abnormality based on a rotation speed signal; a vibration analysis part for performing the envelope process and FFT analysis on a waveform of a vibration signal and analyzing the frequencies on the envelope spectrum; an internal memory for storing, for each operation pattern, a theoretical frequency error probability distribution model; and a comparison determination part for calculating a deviation between a peak frequency detected from the envelope spectrum and the theoretical frequency for each rotary component element, obtaining likelihood from the deviation based on the theoretical frequency error probability distribution model, and diagnosing a presence of abnormality and an abnormal portion of the rotary component.

Summary of Invention

Technical Problem

In the methods recited in documents JP 2004- 265 009 A and JP 2006- 234 784 A, an abnormality diagnosis is performed using an abnormality diagnosis device separate from each machine tool. During an abnormality diagnosis, it is necessary to keep the machine tool in operation. If input operations for machine tool operations and notifications relevant to the abnormality diagnosis are performed using different, separate devices, operator-friendliness degrades. In view of this concern, it is possible for the controller of the machine tool to incorporate all the configuration of the above-described abnormality diagnosis device. However, an abnormality diagnosis includes heavy-load processings such as a frequency analysis. Hence, with this system configuration, a significantly high level of processing performance is required of the processor of the controller.

An object of the technique disclosed in the present application is to provide a diagnosis system for a machine tool, and a method of diagnosing a machine tool. This object is achieved by a diagnosis system for a machine tool according to claim 1, and a method of diagnosing a machine tool according to claim 13. Advantageous further developments are as set forth in the respective dependent claims.

The diagnosis system and the method ensure that rough abnormality diagnosis processing performed by the machine tool and detailed abnormality diagnosis processing performed for the machine tool by a remote diagnosis device are both realized while preventing the load on the controller from being significantly heavy by employing such a configuration that a processing device to process a sensor signal for abnormality diagnosis purposes is separate from the controller of the machine tool. The diagnosis system and the method also improve operator-friendliness of rough abnormality diagnosis and detailed abnormality diagnosis by employing a centralized configuration in which input operations for machine tool operations and notifications of rough abnormality diagnosis results are both performed in the machine tool.

The following examples are not covered by the independent claims.

A machine tool according to the first example includes a component, a sensor, a signal processing device, a controller, and an Input-Output device. The component is variable in state based on an operation of an actuator of the machine tool. The sensor is configured to detect the state of the component. The signal processing device is configured to process a signal from the sensor. The controller is configured to control the operation of the actuator. The Input-Output device is configured to receive an instruction for the controller to control the actuator to conduct the operation. The Input-Output device is configured to notify an operation status of the actuator. The signal processing device is configured to, based on the signal, generate rough state-description data relevant to an occurrence of an abnormality in the component, and configured to transmit the generated rough state-description data to the controller. The signal processing device is configured to, based on the signal, generate detailed state-description data that is for identifying an abnormal part in the component and that is more informative than the rough state-description data.

The signal processing device is configured to transmit the generated detailed state-description data to a remote monitor apparatus that is configured to analyze the state of the component. Based on the rough state-description data transmitted to the controller, the Input-Output device is configured to notify an operator of whether the abnormality is occurring in the component.

According to a second example, in the machine tool according to the first example, the controller is configured to transmit a first command to the signal processing device to control the signal processing device to generate the rough state-description data based on the signal. The signal processing device is configured to generate the rough state-description data upon receipt of the first command, and configured to transmit the generated rough state-description data to the controller.

According to a third example, in the machine tool according to the first or second example, the remote monitor apparatus is configured to transmit a second command to the signal processing device to control the signal processing device to generate the detailed state-description data based on the signal. The signal processing device is configured to generate the detailed state-description data upon receipt of the second command, and configured to transmit the generated detailed state-description data to the remote monitor apparatus.

According to a fourth example, the machine tool according to the third example further includes a communication line connecting the controller and the signal processing device to each other. The remote monitor apparatus is connected to the signal processing device via a communication network. A gateway is provided between the signal processing device and the remote monitor apparatus. The first command and the rough state-description data are transmitted via the communication line. The second command and the detailed state-description data are transmitted via the communication network. Preferably, the communication line is smaller in communication capacity than the communication network. The communication capacity of the communication line, however, may be equal to or larger than the communication capacity of the communication network.

According to a fifth example, in the machine tool according to any one of the second to fourth examples, the first command includes at least one of a program code and an execution command. The program code is for generating the rough state-description data based on the signal. The execution command is to execute the program code that has been transmitted from the controller to the signal processing device and has been stored in the signal processing device.

According to a sixth example, in the machine tool according to the fifth example, the program code includes factor identification information and synthesis information. The factor identification information is for identifying a plurality of factors of the signal transmitted from the sensor, the plurality of factors being relevant to the abnormality in the component. The synthesis information specifies a synthesis method of synthesizing at least two factors of the plurality of factors are synthesized with each other. Upon execution of the program code, the signal processing device is configured to extract the plurality of factors from the signal, and configured to synthesize the at least two factors with each other according to the synthesis method to obtain a synthesis value.

According to a seventh example, in the machine tool according to the sixth example, the rough state-description data includes the synthesis value.

According to an eighth example, in the machine tool according to the fifth or seventh example, the program code includes a threshold for determining the abnormality in the component. Upon execution of the program code, the signal processing device is configured to, based on the plurality of factors and the threshold, determine whether the abnormality is occurring in the component. The rough state-description data includes information indicating whether the abnormality is occurring in the component.

According to a ninth example of the present disclosure, in the machine tool according to any one of the sixth to eighth examples, the component includes a plurality of parts. The abnormality includes a plurality of defects including a damage to the plurality of parts and an abnormal engagement between the plurality of parts. Each of the plurality of defects is indicated by at least one of the plurality of factors.

According to a tenth example, in the machine tool according to the ninth example, The detailed state-description data includes the plurality of factors such that each of the plurality of factors is identifiable.

According to an eleventh example, in the machine tool according to the ninth or tenth example, the plurality of parts include an inner ring, an outer ring, and a rolling element of a bearing provided in the component. The sensor is a vibration sensor configured to detect a vibration of the bearing. The plurality of factors include a frequency component of a first frequency of the signal from the vibration sensor and that is susceptible to a damage to the inner ring. The plurality of factors include a frequency component of a second frequency of the signal from the vibration sensor and that is susceptible to a damage to the outer ring. The plurality of factors include a frequency component of a third frequency of the signal from the vibration sensor and that is susceptible to a damage to the rolling element. The factor identification information includes information for identifying the first frequency, the second frequency, and the third frequency.

According to a twelfth example, in the machine tool according to the third or fourth example, a permission instruction is input to the machine tool via the Input-Output device to permit the detailed state-description data to be output to the remote monitor apparatus is input via the Input-Output device. While the detailed state-description data is permitted by the permission instruction to be transmitted to the remote monitor apparatus, the signal processing device is configured to receive the second command and transmit the detailed state-description data to the remote monitor apparatus.

A diagnosis system for a machine tool according to a thirteenth example includes the machine tool according to any one of the first to twelfth examples, a remote monitor apparatus, a communication network connecting the remote monitor apparatus and the signal processing device to each other, and a gateway provided between the remote monitor apparatus and the signal processing device on the communication network.

According to a fourteenth example, the diagnosis system according to the thirteenth example further includes a storage accessible by the remote monitor apparatus via the communication network. The controller is configured to transmit the rough state-description data to the storage. The storage is configured to store sets of the rough state-description data for each of a plurality of the components such that the sets of the rough state-description data are searchable on a time-series basis. The remote monitor apparatus is configured to obtain the rough state-description data from the storage when the remote monitor apparatus analyzes the detailed state-description data.

A method of diagnosing a machine tool according to the fifteenth example includes, based on an input via an Input-Output device of the machine tool, driving an actuator of the machine tool to change a state of a component of the machine tool, detecting the state of the component by a sensor, transmitting, to a signal processing device of the machine tool, a signal indicating the state detected by the sensor, , generating, based on the signal, rough state-description data relevant to an occurrence of an abnormality in the component by the signal processing device, transmitting the generated rough state-description data to a controller that is configured to control an operation of the actuator, generating detailed state-description data that is for identifying an abnormal part in the component and that is more informative than the rough state-description data based on the signal by the signal processing device, transmitting the generated detailed state-description data to a remote monitor apparatus that is configured to analyze the state of the component, and notifying an operator of whether the abnormality is occurring in the component by the Input-Output device based on the rough state-description data transmitted to the controller.

According to a sixteenth example, the diagnosis method according to the fifteenth example further includes, using the controller, transmitting a first command to the signal processing device to cause the signal processing device to generate the rough state-description data based on the signal. The signal processing device generates the rough state-description data upon receipt of the first command, and transmits the generated rough state-description data to the controller.

According to a seventeenth example, the diagnosis method according to the fifteenth or sixteenth example further includes, using the remote monitor apparatus, transmitting a second command to the signal processing device to control the signal processing device to generate detailed state-description data based on the signal. The signal processing device generates the detailed state-description data upon receipt of the second command, and transmits the generated detailed state-description data to the remote monitor apparatus.

According to an eighteenth example, in the diagnosis method according to the seventeenth example, the first command and the rough state-description data are transmitted via a communication line connecting the controller and the signal processing device to each other. The second command and the detailed state-description data are transmitted via a communication network connecting the remote monitor apparatus and the signal processing device to each other. A gateway is provided between the signal processing device and the remote monitor apparatus. Preferably, the communication capacity of the communication line is smaller than the communication capacity of the communication network. The communication capacity of the communication line, however, may be equal to or larger than the communication capacity of the communication network.

According to a nineteenth example, in the diagnosis method according to any one of the sixteenth to eighteenth examples, the first command includes at least one of a program code and an execution command. The program code is for generating the rough state-description data based on the signal. The execution command is to execute the program code that has been transmitted from the controller to the signal processing device and has been stored in the signal processing device.

According to a twentieth example, in the diagnosis method according to the nineteenth example, the program code includes factor identification information and synthesis information. The factor identification information is for identifying a plurality of factors relevant to the abnormality in the component. The synthesis information specifies a synthesis method of synthesizing at least two factors of the plurality of factors are synthesized with each other. Upon execution of the program code, the signal processing device extracts the plurality of factors from the signal, and configured to synthesize the at least two factors with each other according to the synthesis method to obtain a synthesis value.

According to a twenty-first example, in the diagnosis method according to the twentieth example, the rough state-description data includes the synthesis value.

According to a twenty-second example, in the diagnosis method according to any one of the nineteenth to twenty-first examples, the program code includes a threshold for determining the abnormality in the component. Upon execution of the program code, based on the plurality of factors and the threshold, the signal processing device determines whether the abnormality is occurring in the component. The rough state-description data includes information indicating whether the abnormality is occurring in the component.

According to a twenty-third example, in the diagnosis method according to any one of the twentieth to twenty-second examples, the component includes a plurality of parts. The abnormality includes a plurality of defects including a damage to the plurality of parts and an abnormal engagement between the plurality of parts, and each of the plurality of defects is indicated by at least one of the plurality of factors.

According to a twenty-fourth example, in the diagnosis method according to the twenty-third example, the detailed state-description data includes the plurality of factors such that each of the plurality of factors is identifiable.

According to a twenty-fifth example, in the diagnosis method according to the twenty-third example or the twenty-fourth example, the plurality of parts include an inner ring, an outer ring, and a rolling element of a bearing provided in the component. The sensor is a vibration sensor configured to detect a vibration of the bearing. The plurality of factors include a frequency component of a first frequency of the signal from the vibration sensor and that is susceptible to a damage to the inner ring. The plurality of factors include a frequency component of a second frequency of the signal from the vibration sensor and that is susceptible to a damage to the outer ring. The plurality of factors include a frequency component of a third frequency of the signal from the vibration sensor and that is susceptible to a damage to the rolling element. The factor identification information includes information identifying the first frequency, the second frequency, and the third frequency.

According to a twenty-sixth example, the diagnosis method according to the seventeenth or eighteenth example includes inputting a permission instruction to the machine tool via the Input-Output device to permit the detailed state-description data to be output to the remote monitor apparatus is input via the Input-Output device. While the detailed state-description data is permitted by the permission instruction to be transmitted to the remote monitor apparatus, the signal processing device receives the second command and transmits the detailed state-description data to the remote monitor apparatus.

According to a twenty-seventh example, the diagnosis method according to any one of the fifteenth to twenty-sixth examplesfurther includes, using the controller, transmitting the rough state-description data to a storage accessible by the remote monitor apparatus via the communication network. Using the storage, sets of the rough state-description data are stored for each of a plurality of the components such that the sets of the rough state-description data are searchable on a time-series basis. The remote monitor apparatus obtains the rough state-description data from the storage when the remote monitor apparatus analyzes the detailed state-description data.

In the machine tool according to the first example, in the diagnosis system according to the thirteenth example including the machine tool according to the first example, and in the method according to the fifteenth example of diagnosing a machine tool, the signal processing of processing a signal from the sensor for abnormality diagnosis purposes is performed at the signal processing device, and the signal processing device is separate from the controller of the machine tool. Thus, rough abnormality diagnosis processing performed by the machine tool and detailed abnormality diagnosis processing performed for the machine tool by a remote diagnosis device are both realized while preventing the load on the controller from being significantly heavy. Also, a centralized configuration is employed in which input operations for machine tool operations and notifications of rough abnormality diagnosis results are both performed in the machine tool. As a result, operator-friendliness of rough abnormality diagnosis and detailed abnormality diagnosis improves.

In the machine tool according to the second example , in the diagnosis system according to the thirteenth example including the machine tool according to the second example, and in the method according to the sixteenth example of diagnosing a machine tool, a rough abnormality diagnosis can be performed using a commercially available signal processing device capable of processing an external command. As a result, the cost of machine tool production reduces.

In the machine tool according to the third example, in the diagnosis system according to the thirteenth example including the machine tool according to the third example, and in the method according to the seventeenth example of diagnosing a machine tool, the remote monitor apparatus is capable of analyzing the output from the sensor in any desired manner. Also, a detailed abnormality diagnosis can be performed using a commercially available signal processing device capable of processing an external command. As a result, the cost of machine tool production reduces.

In the machine tool according to the fourth example, in the diagnosis system according to the thirteenth example including the machine tool according to the fourth example, and in the method according to the eighteenth example of diagnosing a machine tool, the signal processing device is capable of transmitting the second command and the detailed state-description data without the intervention of the controller. This reduces the load on the controller. Also, the rough state-description data is smaller in information amount than the detailed state-description data. This makes communication capacity of the communication line smaller capacity than communication capacity of the communication network, ensuring that a various kinds of lines can be used as the communication line.

In the machine tool according to the fifth example, in the diagnosis system according to the thirteenth example including the machine tool according to the fifth example, and in the method according to the nineteenth example of diagnosing a machine tool, a program code for generating the rough state-description data based on the signal is transmitted from the controller to the signal processing device. In this manner, the code can be executed under the control of the controller. This ensures that the algorithm of the rough abnormality diagnosis can be flexibly changed.

In the machine tool according to the sixth example, in the diagnosis system according to the thirteenth example including the machine tool according to the sixth example, and in the method according to the twentieth example of diagnosing a machine tool, a plurality of factors relevant to an abnormality in the component are used to make a determination on the abnormality in the component. This ensures that a determination on an abnormality in the component can be made highly accurately. Also, a synthesis value is generated by synthesizing at least two factors of the plurality of factors with each other. This ensures that a determination on an abnormality in the component can be made according to a rough determination method.

In the machine tool according to the seventh example, in the diagnosis system according to the thirteenth example including the machine tool according to the seventh example, and in the method according to the twenty-first example of diagnosing a machine tool, the synthesis value can be output to the Input-Output device. This ensures that the operator of the machine tool can be notified of the degree of abnormality.

In the machine tool according to the eighth example, in the diagnosis system according to the thirteenth example including the machine tool according to the eighth example, and in the method according to the twenty-second example of diagnosing a machine tool, information indicating whether an abnormality is occurring in the component can be output to the Input-Output device. This ensures that the operator of the machine tool can be notified of whether an abnormality is occurring in the component.

In the machine tool according to the ninth example, in the diagnosis system according to the thirteenth example including the machine tool according to the ninth example, and in the method according to the twenty-third example of diagnosing a machine tool, a determination on an abnormality in the component can be made accurately using a plurality of factors each indicating each of a plurality of defects including a damage to the plurality of parts and an abnormal engagement between the plurality of parts.

In the machine tool according to the tenth example, in the diagnosis system according to the thirteenth example including the machine tool according to the tenth example, and in the method according to the twenty-fourth example of diagnosing a machine tool, defects including a damage to the plurality of parts and an abnormal engagement between the plurality of parts can be determined by the remote monitor apparatus.

In the machine tool according to the eleventh example, in the diagnosis system according to the thirteenth example including the machine tool according to the eleventh example, and in the method according to the twenty-fifth example of diagnosing a machine tool, an abnormality of an inner ring, an abnormality of an outer ring, and an abnormality of a rolling element of a bearing can be determined independently by the remote monitor apparatus.

In the machine tool according to the twelfth example, in the diagnosis system according to the thirteenth example including the machine tool according to the twelfth example, and in the method according to the twenty-sixth example of diagnosing a machine tool, the operator of the machine tool is able to control the remote monitor apparatus's access to the signal processing device.

In the diagnosis system according to the fourteenth example and in the method according to the twenty-seventh example of diagnosing a machine tool, the remote monitor apparatus is capable of referring to the time-series rough state-description data when the remote monitor apparatus analyzes the detailed state-description data. This enables the remote monitor apparatus to analyze the state of the component in detail.

Effects of Invention

According to the technique disclosed in the present application, the signal processing of processing a signal from the sensor for abnormality diagnosis purposes device is separate from the controller of the machine tool. This ensures that rough abnormality diagnosis processing performed by the machine tool and detailed abnormality diagnosis processing performed for the machine tool by a remote diagnosis device are both realized while preventing the load on the controller from being significantly heavy. The technique disclosed in the present application also improves operator-friendliness of rough abnormality diagnosis and detailed abnormality diagnosis by employing a centralized configuration in which input operations for machine tool operations and notifications of rough abnormality diagnosis results are both performed in the machine tool.

Brief Description of Drawings

[FIG. 1] FIG. 1 is a block diagram illustrating a configuration of a diagnosis system for a machine tool.

[FIG. 2] FIG. 2 is a flowchart of rough diagnosis processing.

[FIG. 3] FIG. 3 is a sequence diagram of the rough diagnosis.

[FIG. 4] FIG. 4 illustrates an application example of a rough diagnosis script.

[FIG. 5] FIG. 5 is a flowchart of detailed diagnosis processing.

[FIG. 6] FIG. 6 is a sequence diagram of the detailed diagnosis processing according to an embodiment.

Description of Embodiments

The present invention will now be described with reference to the accompanying drawings, wherein like reference numerals designate corresponding or identical elements throughout the various drawings.

<Configuration of Machine Tool 1>

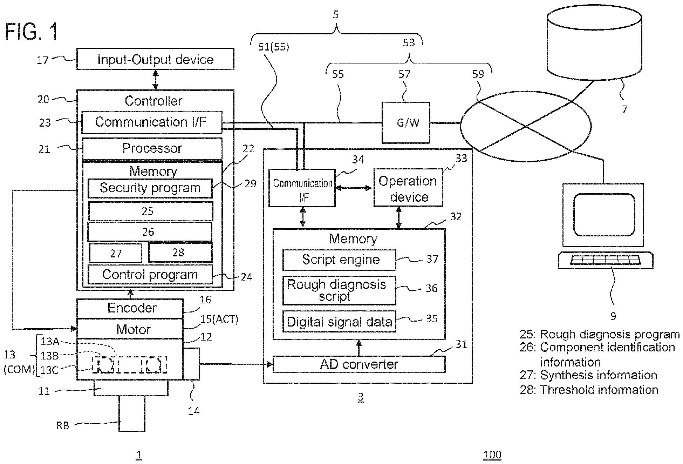

FIG. 1 is a block diagram illustrating a configuration of a diagnosis system 100 according to an embodiment of the present invention. The diagnosis system 100 is for a machine tool. The diagnosis system 100 includes a machine tool 1, a signal processing device 3, a network 5, a storage 7, and a remote monitor apparatus 9. The machine tool 1 includes a spindle 11, a spindle case 12, a bearing 13, a sensor 14, a motor 15, an encoder 16, an Input-Output device 17, and a controller 20. The spindle 11 is mounted on the spindle case 12 via the bearing 13 and rotatable relative to the spindle case 12. More specifically, the bearing 13 includes an inner ring 13A, a rolling element 13B, and an outer ring 13C. The spindle 11 is connected to the inner ring 13A. The inner ring 13A is rotationally movable together with the spindle 11. the rolling element 13B is configured to rotationally move on the inner surface of the outer ring 13C in accordance with the rotation of the inner ring 13A. While the outer ring 13C is fixed to the spindle case 12, the outer ring 13C vibrates when the rolling element 13B moves. To the spindle 11, a machining-purpose rotation body RB is attachable. The rotation body RB may be a tool or a workpiece. The sensor 14 is mounted on the bearing 13 or a part near the bearing 13. The sensor 14 is configured to detect a vibration of the bearing 13 which vibration is involved with a rotation of the spindle 11. That is, the sensor 14 is a vibration sensor configured to detect a vibration of the bearing 13. It is to be noted that other sensors than the sensor 14 may be mounted on parts near detection targets other than the bearing 13. That is, a plurality of sensors may be provided.

The motor 15 is an actuator ACT of the machine tool 1, and rotates the spindle 11. When the spindle 11 is rotated in this manner, the inner ring 13A and the rolling element 13B of the bearing 13 are rotated, causing the inner ring 13A, the rolling element 13B, and the outer ring 13C of the bearing 13 to vibrate. Thus, the machine tool 1 includes parts that are variable in state based on an operation of the actuator ACT. In this embodiment, these parts will be referred to as components COM. Accordingly, the bearing 13 may be referred to as a component COM. It is to be noted that the bearing 13 is an example component COM and that another part variable in state based on an operation of another actuator ACT of the machine tool 1 may be regarded as a component COM. As used herein, the term "state" is intended to mean a state of a physical phenomenon such as vibration, sound, temperature, light, capacitance, oil film thickness, and emission of chemical component species such as smoke. The sensor 14 may be a sensor to detect such state of the component COM. In a case where the bearing 13 is a component COM, the component COM includes a plurality of parts.

At the motor 15, the encoder 16 is provided to measure a rotation speed of the motor 15 and input the measured rotation speed to the controller 20. It is to be noted that there may be a case in which an other rotation speed detector is capable of detecting the rotation speed of the motor 15. In this case, the encoder 16 may be replaced with the other rotation speed detector. The controller 20 is configured to control an operation of the actuator ACT. Specifically, based on the rotation speed of the motor 15 measured by the encoder 16, the controller 20 controls the current supplied to the motor 15 to maintain the instructed rotation speed input to the controller 20. The Input-Output device 17 includes an input interface and an output interface. On the input interface, the instructed rotation speed is input. The output interface indicates the present rotation speed of the motor 15 measured by the encoder 16. That is, the Input-Output device 17 is configured to receive an instruction for the controller 20 to cause the actuator ACT to make an operation, and configured to notify an operation status of the actuator ACT.

The Input-Output device 17 is a control panel commonly used as an Input-Output device of the machine tool 1. Examples of such Input-Output device 17 include a touch panel integral to an Input-Output interface, and a control panel including switches, push buttons, and a monitor. It is to be noted that the input interface and the output interface may not necessarily be provided on the same panel of the Input-Output device 17; the input interface and the output interface may be separate from each other to a degree that enables an operator to make inputs to the input interface while checking the present rotation speed of the motor 15 on the output interface.

The controller 20 includes a processor 21, a memory 22, and a communication interface 23. The controller 20 at least includes a computer numerical controller (computerized numerical control device) and a programmable logic controller (programmable logic controller). The processor 21 executes a program stored in the memory 22 to control various operations of the machine tool 1. The memory 22 at least includes a nonvolatile memory that stores the program and various parameters used by the program. The memory 22 is configured to store a control program 24, a rough diagnosis program 25, a factor identification information 26, a synthesis information 27, a threshold information 28, and a security program 29. The control program 24 is a program for performing feedback control of controlling the motor 15 to rotate at an instructed rotation speed input via the Input-Output device 17. Specifically, based on a signal from the encoder 16, the control program 24 performs processing of controlling the current supplied to the motor 15 to make the rotation speed of the motor 15 close to the instructed rotation speed.

The rough diagnosis program 25 is a program that is used in a rough diagnosis of an abnormality in the bearing 13 and that is for receiving an operation of the motor 15 and a rough diagnosis result from the signal processing device 3. The rough diagnosis result is generated by executing a rough diagnosis script 36, which is installed in advance in the signal processing device 3. The rough diagnosis script 36 is generated in advance in the controller 20 based on the factor identification information 26, the synthesis information 27, and the threshold information 28, and is transmitted to the signal processing device 3. It is possible, however, for the rough diagnosis program 25 to generate the rough diagnosis script 36 and transmit the rough diagnosis script 36 to the signal processing device 3 to receive the rough diagnosis result. The rough diagnosis script 36 is a program code for generating, based on a signal from the sensor 14, rough state-description data using at least one of the factor identification information 26, the synthesis information 27, and the threshold information 28. The rough state-description data is relevant to an occurrence of an abnormality in the component COM. The factor identification information 26, the synthesis information 27, and the threshold information 28 are intended to mean parameters used in the rough diagnosis script 36. The controller 20 performs processing of generating a first command and transmitting the generated first command to the signal processing device 3. The first command includes an execution command for executing the rough diagnosis script 36. That is, the first command includes at least one of: a program code for generating rough state-description data based on a signal from the sensor 14; and an execution command for executing a program code transmitted to the signal processing device 3 from the controller 20 and stored in the signal processing device 3. After the rough diagnosis script 36 is executed, the rough state-description data generated in the signal processing device 3 is transmitted to the controller 20. Based on the rough state-description data received by the controller 20, the rough diagnosis program 25 performs processing of, via the Input-Output device 17, notifying the operator of whether an abnormality is occurring in the component COM. Thus, the controller 20 is configured to transmit the first command to the signal processing device 3. The first command instructs rough state-description data to be generated based on a signal from the sensor 14. Also based on the rough state-description data transmitted to the controller 20, the Input-Output device 17 is configured to notify the operator of whether an abnormality is occurring in the component COM. The security program 29 performs processing of controlling the remote monitor apparatus 9 to access the signal processing device 3. Processing details of the rough diagnosis program 25 and the security program 29 will be described later.

The signal processing device 3 is configured to process the signal from the sensor 14. In a case where a plurality of sensors 14 are provided, the signal processing device 3 may be configured to process, in parallel, signals from the sensors. The signal processing device 3 includes an analogue digital converter (AD converter) 31, a memory 32, an operation device 33, and a communication interface 34. The AD converter 31 is configured to convert an analogue signal from the sensor 14 into a digital signal. The memory 32 is configured to store information such as digital signal data 35 and the above-described rough diagnosis script 36. The digital signal data 35 is a digital signal obtained by converting the signal from the sensor 14; The memory 32 is also configured to store a script engine 37 and digital signal components extracted by the operation device 33. The script engine 37 executes scripts such as the rough diagnosis script 36. The communication interface 34 controls communication between the communication interface 23 of the controller 20 and the signal processing device 3 and communication between the remote monitor apparatus 9 and the signal processing device 3.

Specifically, upon receipt of the first command from the controller 20, the communication interface 34 transmits information based on the first command to the operation device 33, and the operation device 33 executes the script engine 37 to perform processing described in the rough diagnosis script 36. By performing this processing, the operation device 33 generates rough state-description data based on the digital signal originating from the sensor 14, and transmits the generated rough state-description data to the communication interface 34. The communication interface 34 transmits the rough state-description data to the controller 20 as a reply to the first command.

Thus, the signal processing device 3 is configured to generate rough state-description data based on a signal from the sensor 14, the rough state-description data being relevant to an occurrence of an abnormality in the component COM, and configured to transmit the generated rough state-description data to the controller 20. The first command and the rough state-description data will be detailed later. It is to be noted that the operation device 33 may include an application specific integrated circuit (ASIC), which is capable of fast digital signal processing such as fast Fourier transformation (FFT), or that the operation device 33 may be implemented by a typical processor and a program for performing digital signal processing. The communication interface 34 and the communication interface 23 of the controller 20 may be implemented by a communication interface, such as an Ethernet and a serial-parallel line, and software for controlling the communication interface, or may be implemented by dedicated hardware.

The network 5 includes a communication line 51 and a communication network 53. The communication line 51 connects the controller 20 and the signal processing device 3 to each other. Specifically, the communication line 51 connects the communication interface 23 of the controller 20 to the communication interface 34 of the signal processing device 3. The first command and the rough state-description data are transmitted via the communication line 51. While the communication line 51 is preferably an Ethernet, the communication line 51 may be a serial line such as RS-232C and USB or a parallel line such as SCSI. Further, the communication line 51 may not necessarily be implemented by wired communication line but may be implemented by wireless communication. The communication line 51 may be smaller in communication capacity than the communication network 53.

The communication network 53 connects the signal processing device 3 and the remote monitor apparatus 9 to each other. The communication network 53 includes an Ethernet 55 and an Internet 59. The Ethernet 55 is a network in the factory, plant, or other facility where the machine tool 1 is provided. The communication line 51 may be an Ethernet identical to the Ethernet 55. In a case where the communication line 51 is a communication line different from the Ethernet 55, the communication interface 23 of the controller 20 may preferably be connected to the Ethernet 55 as well. A gateway 57 is provided between the Ethernet 55 and the Internet 59. That is, the gateway 57 is provided between the signal processing device 3 and the remote monitor apparatus 9. The gateway 57 is configured to, based on a access control list (ACL), permit only the remote monitor apparatus 9 and those terminals determined in advance to access the Ethernet 55.

The remote monitor apparatus 9 is configured to analyze a state of the component COM. In instruction to perform this analysis, the remote monitor apparatus 9 is configured to transmit a second command to the signal processing device 3. The second command instructs detailed state-description data to be generated based on a signal from the sensor 14. As used herein, the term "detailed state-description data" is intended to mean data that is for identifying an abnormal part in the component COM and that is more informative than the rough state-description data. Upon receipt of the second command, the signal processing device 3 is configured to generate detailed state-description data and transmit the generated detailed state-description data to the remote monitor apparatus 9. The second command and the detailed state-description data are transmitted via the communication network 53. The second command and the detailed state-description data will be detailed later.

The storage 7 is a storage device provided on the Internet 59. The storage 7 is preferably a storage in a cloud system provided on the Internet 59, and both the controller 20 and the remote monitor apparatus 9 have access to the storage 7. Specifically, the remote monitor apparatus 9 has access to the storage 7 via the communication network 53, and the controller 20 has access to the storage 7 via the communication network 53. It is to be noted, however, that the storage 7 may be provided on the site of the workplace where the remote monitor apparatus 9 is provided and that the storage 7 may be accessible from the remote monitor apparatus 9 via an Ethernet. The controller 20 is configured to transmit, to the storage 7, the rough state-description data transmitted from the signal processing device 3. Specifically, upon receipt of the rough state-description data from the signal processing device 3, the controller 20 is configured to transmit the received rough state-description data to the storage 7. The storage 7 is configured to receive the rough state-description data from the controller 20 and store the received rough state-description data. Specifically, the storage 7 is configured to store sets of the rough state-description data for each of the components COM such that the sets of the rough state-description data are searchable on a time-series basis. In a case where a plurality of sensors are provided, the storage 7 may be configured to store sets of the rough state-description data such that the sets of the rough state-description data are searchable for each sensor connected to each component COM, instead of being searchable for each component COM. Insofar as the sets of the rough state-description data are searchable on a time-series basis, the sets of the rough state-description data may be stored in the storage 7 in an order different from the time-series order, such as decreasing order of the numerical values included in the data. When the remote monitor apparatus 9 analyzes the detailed state-description data, the remote monitor apparatus 9 configured to obtain the rough state-description data from the storage 7.

<Rough Diagnosis Method>

Next, description will be made with regard to a rough diagnosis method according to this embodiment which method is performed for a component COM by the rough diagnosis program 25. In instruction for the rough diagnosis script 36 to be executed after being called from the rough diagnosis program 25, it is necessary to set the factor identification information 26, the synthesis information 27, and the threshold information 28 in advance. A method of this setting will be described. As used herein, the term "factor identification information 26" is intended to mean information for identifying a plurality of factors of the signal from the sensor 14 which factors are relevant to an abnormality in a component COM. In the following description, the bearing 13 will be taken as an example component COM in a case where each of the inner ring 13A, the rolling element 13B, and the outer ring 13C of the bearing 13 is damaged. In this case, a vibration is known to occur at a particular frequency corresponding to each of the inner ring 13A, the rolling element 13B, and the outer ring 13C (see, for example, JP 63-297813 A).

In the following description, the rotation speed of the motor 15 will be denoted $No$ (min$^{-1}$), the diameter of the rolling element 13B of the bearing 13 will be denoted $d$ (mm), the pitch circle diameter of the rolling element 13B will be denoted $d$ (mm), the number of rolling elements 13B will be denoted $Z$, and the contact angle of the rolling element 13B will be denoted $\alpha$ (radian). In this respect, frequency $f_A$ (Hz) is a frequency at which a vibration occurs when the inner ring 13 A has a damage or a separation at the race face of the inner ring 13A, frequency $f_B$ (Hz) is a frequency at which a vibration occurs when the rolling element 13B has a damage or a separation, and frequency $f_C$ (Hz) is a frequency at which a vibration occurs when the outer ring 13C has a damage or a separation at the race face of the outer ring 13C. The frequency $f_A$, the frequency $f_B$, and the frequency $f_C$ are respectively represented by the following Formulae (1) to (3).

$$f_A = (ZNo/120) \cdot (1 + d \cdot \cos\alpha/D) \ (1)$$

$$f_B = (NoD/120d) \cdot \{1-(d/D)^2 \cdot \cos^2\alpha\} \ (2)$$

$$f_C = (ZNo/120) \cdot (1-d \cdot \cos\alpha/D) \ (3)$$

Among the above-described parameters, the diameter of the rolling element 13B, the pitch circle diameter of the rolling element 13B, the number of rolling elements 13B, and the contact angle of the rolling element 13B are determined based on the specifications of the bearing 13. Also, the rotation speed of the motor 15 can be set to an optimal value empirically. The factor identification information 26 includes information identifying a first frequency $f_A$, a second frequency $f_C$, and a third frequency $f_B$, which are respectively determined in the above-described manners. That is, the plurality of factors relevant to abnormality in the component COM include a frequency component of a first frequency $f_A$, a frequency component of a second frequency $f_C$, and a frequency component of a third frequency $f_B$. The frequency component of the first frequency $f_A$ is a factor of a signal from a vibration sensor (the sensor 14) susceptible to a damage to the inner ring 13A. The frequency component of the second frequency $f_C$ is a factor of a signal from a vibration sensor (the sensor 14) susceptible to a damage to the outer ring 13C. The frequency component of the third frequency $f_B$ is a factor of a signal from a vibration sensor (the sensor 14) susceptible to a damage to the rolling element 13B. In other words, the plurality of factors each represent each of a plurality of defects including a damage to a plurality of parts of the component COM and an abnormal engagement between the plurality of parts. The factor identification information 26 may also include information indicating all frequency components as a parameter for identifying how the bearing 13 is damaged as a whole. It is to be noted that the factor identification information 26 includes, more specifically, $f_A/No$, $f_B/No$, and $f_C/No$ for the ease with which a change in $No$, which is the rotation speed of the motor 15, is dealt with. It is also to be noted that in the following description, the rotation speed of the motor 15 determined empirically for rough diagnosis purposes will be referred to as rough diagnosis rotation speed. The rough diagnosis program 25 is capable of perform processing of, by calling the control program 24, causing the motor 15 to rotate at the rough diagnosis rotation speed.

The synthesis information 27 is information specifying a synthesis method of synthesizing at least two factors of the plurality of factors are synthesized with each other. Using the synthesis information 27, a synthesis value is generated by combining a plurality of the frequency component values. Based on the synthesis value, an abnormality in the component COM is determined. In the synthesis value, the plurality of factors relevant to abnormality in the component COM are unidentifiably combined. Therefore, it is impossible to identify the abnormal part in the component COM by analyzing the synthesis value. For example, the synthesis information 27 stores information defining calculation of the sum or average of the frequency component of the frequency $f_A$, the frequency component of the frequency $f_B$, and the frequency component of the frequency $f_C$. The synthesis information 27 also stores information defining calculation of an integration value of all the frequency components or a root mean square value (RMS value) of all the frequency components. The rough diagnosis rotation speed, the factor identification information 26, and the synthesis information 27 are stored in the memory 22 when the rough diagnosis script 36 is generated in the controller 20. It is to be noted, however, that the rough diagnosis rotation speed, the factor identification information 26, and the synthesis information 27 may be changed in value based on an input via the Input-Output device 17.

The threshold information 28 includes a threshold for determining an abnormality in the component COM. Specifically, the threshold information 28 is information for determining whether the synthesis value, which has been obtained by a synthesis based on the synthesis information 27, is abnormal (examples of the synthesis value including: the sum of the frequency component of the frequency $f_A$, the frequency component of the frequency $f_B$, and the frequency component of the frequency $f_C$; and an integration value of all the frequency components). The threshold included in the threshold information 28 may not necessarily be one threshold; the threshold information 28 may include thresholds corresponding to a plurality of state stages. Examples include a threshold for determining an abnormal state (this state will be hereinafter referred to as "warning"), and a threshold indicating a state that is not as serious as the abnormal state but requires caution (this state will be hereinafter referred to as "caution"). The threshold information 28 is stored in the memory 22 when the rough diagnosis script 36 is generated in the controller 20. It is to be noted, however, that the threshold information 28 may be changed in value based on an input via the Input-Output device 17.

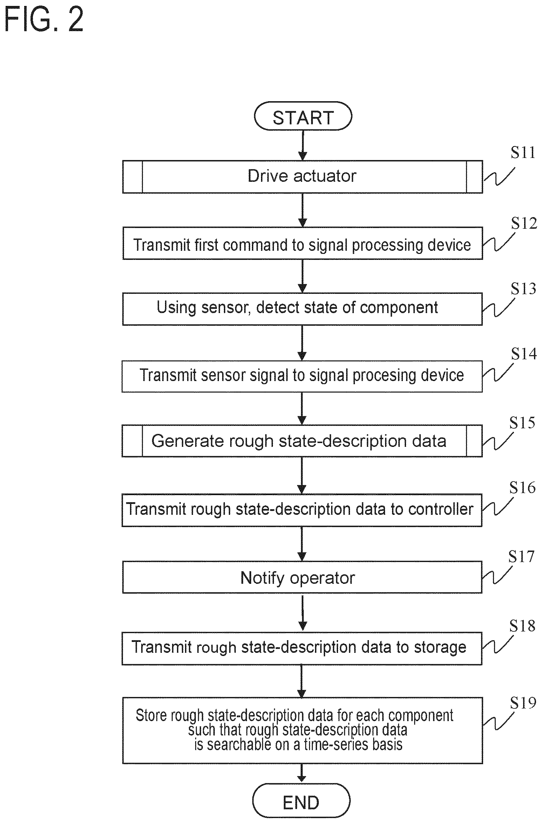

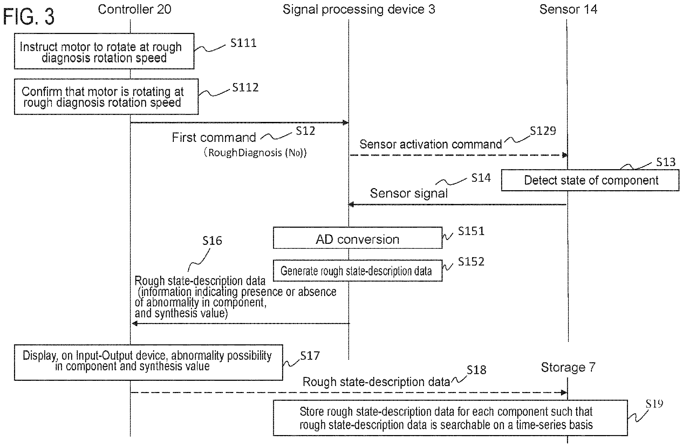

The rough diagnosis program 25 is executed periodically. Specifically, the rough diagnosis program 25 is executed at the operation start time of the day. FIG. 2 is a flowchart of rough diagnosis processing performed by executing the rough diagnosis program 25. FIG. 3 is a sequence diagram of the rough diagnosis processing. Referring to FIGs. 2 and 3, at step S 11, upon input on the Input-Output device 17 of the machine tool 1, the controller 20 drives the actuator ACT of the machine tool 1 to change the state of the component COM. Specifically, the operator activates the rough diagnosis program via the Input-Output device 17 at the operation start time of the day. The controller 20 calls the control program 24 from the rough diagnosis program 25, and transmits an instruction to the motor 15 to cause the motor 15 to rotate at the rough diagnosis rotation speed (step S111 in FIG. 3). It is to be noted that in a case where the rough diagnosis program 25 is automatically activated at the operation start time of the day, the "input" from the Input-Output device 17 of the machine tool 1 corresponds to an input to activate the machine tool 1.

By executing the control program 24, the controller 20 obtains the present rotation speed of the motor 15 from the encoder 16. The controller 20 monitors the present rotation speed of the motor 15 until the present rotation speed of the motor 15 becomes the rough diagnosis rotation speed. Then, upon confirming that the present rotation speed of the motor 15 is the rough diagnosis rotation speed (step S112), the controller 20 transmits the first command to the signal processing device 3 (step S12).

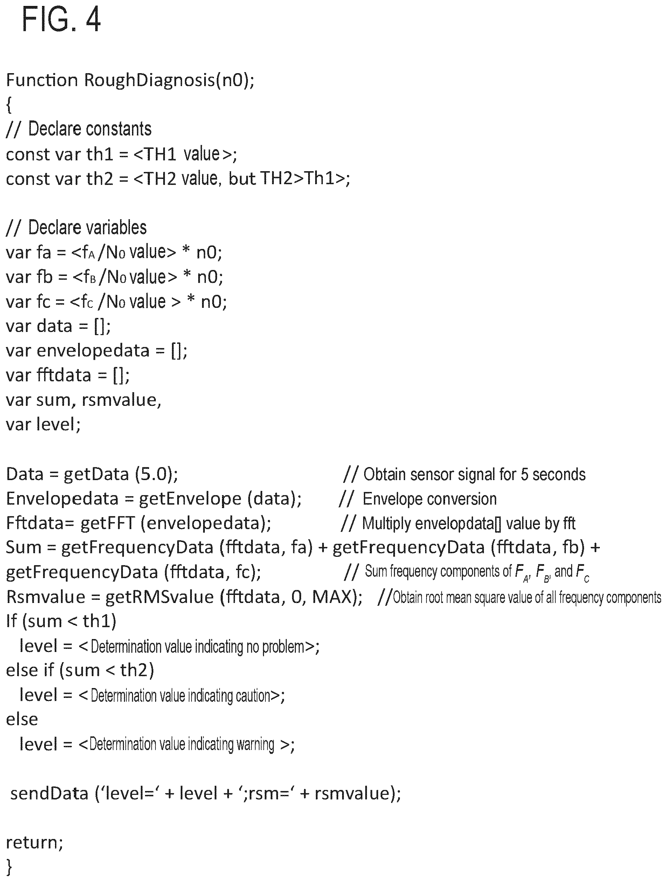

The first command is a command for instructing rough state-description data to be generated based on a signal from the sensor 14. The rough state-description data is relevant to an occurrence of an abnormality in the component COM. Specifically, the first command includes an execution command for executing the rough diagnosis script 36, which describes details of processing of generating rough state-description data based on a signal from the sensor 14, the rough state-description data being relevant to an occurrence of an abnormality in the component COM. The rough diagnosis script 36 preferably includes the factor identification information 26, the synthesis information 27, and the threshold included in the threshold information 28. The rough diagnosis script 36 describes, in a script language, a method of generating the rough state-description data. For example, it is possible to describe a script as illustrated in FIG. 4. The script demands the following processings. (i) Obtain a signal from the sensor 14 for 5 seconds, and subject the signal to AD conversion, envelope processing, and FFT to extract the frequency components of the particular frequencies $f_A$, $f_B$, and $f_C$. (ii) Obtain the sum of the frequency components. (iii) When the sum is in excess of a threshold of $TH1$, set the caution value included in the rough state-description data to TRUE. (iv) When the sum is in excess of a threshold of $TH2$ ($TH1 < TH2$), set the warning value included in the rough state-description data to TRUE. (v) Obtain the root mean square value of all the frequency components. (vi) Return the caution value, the warning value, and the execution value.

FIG. 4 illustrates an example of the rough diagnosis script 36 using JavaScript, which is a representative script language. The example illustrated in FIG. 4 is provided for exemplary purposes only, and it is possible to use any other script language or a markup language such as XML. As illustrated in FIG. 4, RoughDiagnosis function is capable of receiving argument *No* (the rotation speed of the motor 15). Also in FIG. 4, the first two lines starting with "const var" declare constants necessary in the program. "th1, th2" are respectively substituted with the above-described *TH1* and *TH2* values read from the threshold information 28. For "fa", "fb", and "fc", the values of $f_A/No$, $f_B/No$, and $f_C/No$ read from the factor identification information 26 are multiplied by the argument *No,* and resulting frequency values corresponding to $f_A$, $f_B$, and $f_C$ are respectively substituted in "fa", "fb", and "fc". "data" is an array in which values obtained by A/D converting outputs from the sensor 14 are stored. The elements of this array indicate, for example, sensor output values indicated on a time basis. "envelopdata" is an array in which values obtained by envelopeprocessing values in "data" are stored. The elements of this array indicate, for example, envelope values indicated on a time basis. "fftdata" is an array in which frequency spectra obtained by subjecting "envelopdata" to fast Fourier transformation are stored. The elements of this array indicate, for example, frequency component values indicated on a frequency basis. In "sum", the sum of the $f_A$, $f_B$, and $f_C$ frequency components is stored. In "rsmvalue", the root mean square value of the frequency components is stored. In "level", determination values indicating no problem, caution, and warning are stored.

"getData" is a function that, during the time between function calling and description in the argument, causes the signal processing device 3 to A/D convert the signal from the sensor 14 to obtain a digital value, and outputs the digital value to variable "data". "data" is, physically, stored in the memory 32. It is to be noted that "getData" is an example function name, that any other function name may be used, and that the argument may be omitted. In a case where the argument is omitted, the signal processing device 3 obtains the signal from the sensor 14 for a time determined by default. Also, in a case where the signal processing device 3 includes a plurality of connection ports connectable to the sensor 14, a port number may be included as the argument for "getData".

"getEnvelope" is a function that subjects argument "data" to envelope processing to obtain envelope data and outputs the envelope data to the variable "envelopedata". Envelope processing is processing of taking an absolute value of an oscillatory wave form to detect an envelope curve. "envelopedata" is, physically, stored in the memory 32. It is to be noted that "getEnvelope" is an example function name and that any other function name may be used. "getFFT" is a function that subjects the argument "envelopedata" to fast Fourier transformation to obtain a frequency spectrum and outputs the frequency spectrum to the variable "fftdata". "fftdata" is, physically, stored in the memory 32. It is to be noted that "getFFT" is an example function name and that any other function name may be used. Also, in a case where a frequency component limited to a particular frequency range is output, it is possible to specify, as the argument for "getFFT", at least one of the minimal value and the maximum value of the frequency range.

"getFrequencyData(A,B)" outputs a frequency component corresponding to a frequency value that serves as an argument B from a frequency spectrum that serves as an argument A. For each of "fa", "fb", and "fc", "getFrequencyData" is called and the return values are added together so that the sum is substituted with the sum of the $f_A$, $f_B$, $f_C$ frequency components. It is to be noted that "getFrequencyData" is an example function name and that any other function name may be used. It is also to be noted that the order of the arguments may be reversed and/or the argument data form may be any other form. For example, the argument B may specify the order of certain data in the array fftdata[]. For another example, in a case where a sampling frequency of fftdata[] is known, it is not necessary to use a function such as "getFrequencyData"; instead, it is possible to calculate which order of value in fftdata[] corresponds to each of frequency components corresponding to the $f_A$, $f_B$, and $f_C$ frequency values. Thus, it is possible to perform a calculation directly from fftdata[].

"getRMSvalue(A, B, C)" calculates, from the frequency spectrum that serves as the argument A, a root mean square value in a frequency range [B, C] specified by arguments B and C. In the example illustrated in FIG. 4, a root mean square value is calculated in the range from frequency 0 to MAX, which is the maximum frequency calculable by the signal processing device 3. It is to be noted that the maximum frequency MAX may be specified at any value that is twice or more than twice the frequency necessary to be detected. In "level", a determination value indicating caution is substituted when "sum" is equal to *TH1* or less than *TH2.* In "level", a determination value indicating warning is substituted when "sum" is *TH2* or more. "sendData" is a function that transmits, as rough state-description data, a character string described as an argument. The character string described between "'" and "'" includes: a character string for the controller 20 to identify the kind of subsequent data (for example, 'level='); and a delimiter ";". It is to be noted that the character string for identifying the kind of data may be omitted and that the delimiter may be another code.

The synthesis information 27 may be, for example, information that includes the codes of the script illustrated in FIG. 4 excluding the constant declaration. In this case, when the controller 20 executes the rough diagnosis program 25, the controller 20 may generate the first command by: reading the factor identification information 26, the synthesis information 27, and the threshold information 28; and adding a constant declaration to the codes stored as the synthesis information 27 based on the factor identification information 26, and the value stored in the threshold information 28. It is to be noted that the first command may be a binary code, instead of a script. In this case, the controller 20 may generate a binary code including details of the processing of the above-described script. The communication interface 34 of the signal processing device 3 may include a parser for analyzing the binary code of the first command. It is to be noted that in FIG. 4, the first command may use a function that outputs an integration value of all the frequency components, instead of using the function that outputs a rated value ("getRMSvalue(A, B, C)").

The first command is an execution command for executing the rough diagnosis script 36 represented by the above-described RoughDiagnosis. The first command also includes a rough diagnosis rotation speed as an argument of RoughDiagnosis. It is to be noted, however, that in a case where a rough diagnosis rotation speed is transmitted in advance to the signal processing device 3 as an argument of RoughDiagnosis, the first command may not necessarily include a rough diagnosis rotation speed. Upon receipt of the first command, the signal processing device 3 performs the processing described by the script engine 37 in the rough diagnosis script 36. Then, in accordance with the command described in "getData", the signal processing device 3 transmits a sensor activation command to the sensor 14 (step S129). Upon receipt of the sensor activation command, the sensor 14 detects a state of the component COM (step S13). The sensor 14 transmits, to the signal processing device 3, a signal (sensor signal) indicating the state detected by the sensor 14 (step S14). It is to be noted that step S129 may be omitted in a case where the sensor 14 continually outputs a sensor signal to the signal processing device 3, irrespective of the presence and absence of a sensor activation command. Upon receipt of the sensor signal, the signal processing device 3 generates, based on the signal, rough state-description data, which is relevant to an occurrence of an abnormality in the component COM (step S15). Specifically, the signal processing device 3 converts the sensor signal into a digital value (step S151).

Then, the signal processing device 3 generates rough state-description data based on the signal (step S152). Specifically, in accordance with commands defined by "getFFT" and "getFrequencyData" illustrated in FIG. 4, the signal processing device 3 extracts, from the signal, a plurality of factors relevant to an abnormality in the component COM. That is, the signal processing device 3 is configured to extract the plurality of factors from the signal. When the signal processing device 3 generates the rough state-description data, the signal processing device 3 calculates a synthesis value (sum), which is obtained by synthesizing at least two factors of the plurality of factors, based on the mathematical formula indicated by "sum = ..." in FIG. 4 (synthesis method of synthesizing at least two factors of the plurality of factors with each other). That is, the signal processing device 3 is configured to calculate a synthesis value obtained by synthesizing at least two factors of the plurality of factors. Based on the logical formula "if (sum < th1) ... else if (sum < th2) ... else ..." illustrated in FIG. 4, the signal processing device 3 determines (caution, warning) whether an abnormality is occurring in the components COM. That is, based on the above-described plurality of factors and threshold, the signal processing device 3 determines whether the abnormality is occurring in the components COM. Based on the above-described plurality of factors and threshold, the signal processing device 3 is configured to determine whether the abnormality is occurring in the components COM. Also, in accordance with an operation described by the argument of "sendData", the signal processing device 3 generates the rough state-description data based on the signal. This argument includes "sum", that is, the sum of the $f_A$, $f_B$, and $f_C$ frequency components. That is, the rough state-description data includes a synthesis value configured by at least two factors of the plurality of factors relevant to the abnormality in the component COM. The rough state-description data includes "level", that is, information indicating whether the abnormality is occurring in the component COM.

At step S16, the signal processing device 3 transmits the generated rough state-description data to the controller 20, which controls an operation of the actuator ACT. The controller 20 may store the received rough state-description data in relation to the time of receipt. Upon receipt of the rough state-description data from the signal processing device 3, the controller 20, at step S 17, controls the Input-Output device 17 to display the synthesis value and information indicating whether the abnormality is occurring in the component COM. That is, based on the rough state-description data transmitted to the controller 20, the controller 20 notifies, via the Input-Output device 17, the operator of information indicating whether the abnormality is occurring in the component COM. In this notification, the controller 20 notifies the operator of the present rough state-description data. Additionally, using previous sets of rough state-description data, the controller 20 may control the Input-Output device 17 to display time-series changes in the degree of the abnormality in the component COM and time-series changes in the synthesis value.

At step S 17, in a case where no abnormality (warning) is notified, the controller 20 permits the machining program to be executed. Then, the machine tool 1 is permitted to perform machining. The subsequent machining is performed by the operator's manipulation of the Input-Output device 17. For this reason, outputting the result of the rough diagnosis on the Input-Output device 17 is advantageous for smoothly performing the subsequent machining. At step S 17, in a case where an abnormality (warning) is notified, the controller 20 notifies, via the Input-Output device 17, the abnormality and a measure that the operator should take. For example, a detailed diagnosis is recommended to the operator. It is to be noted that at step S 18, the controller 20 performs an optional processing. Specifically, the controller 20 transmits the received rough state-description data to the storage 7, which is accessible by the remote monitor apparatus 9 via the communication network 53. At step S19, the storage 7 stores sets of the rough state-description data for each of the components COM such that the sets of the rough state-description data are searchable on a time-series basis. In a case where there is only one component COM for the machine tool 1, the storage 7 may manage the rough state-description data based on the address of the controller 20 transmitted such that sets of the rough state-description data are searchable for each of components COM. Another possible example is that the rough state-description data includes information on the components COM and that based on the information, the storage 7 may manage the rough state-description data for each of the components COM. Steps S18 and S19 are optional processings and may be omitted.

<Detail Diagnosis Method>

Next, description will be made with regard to a detailed diagnosis method for the components COM performed by the remote monitor apparatus 9 according to this embodiment. The detailed diagnosis is mainly performed in the following three cases (1) to (3).

(1) In a rough diagnosis, abnormality (warning) has been notified and a detailed diagnosis has been recommended to the operator as a measure.
(2) In a rough diagnosis, caution information has been notified and the operator has voluntarily chosen to perform a detailed diagnosis .
(3) An accident has occurred in the machine tool 1.

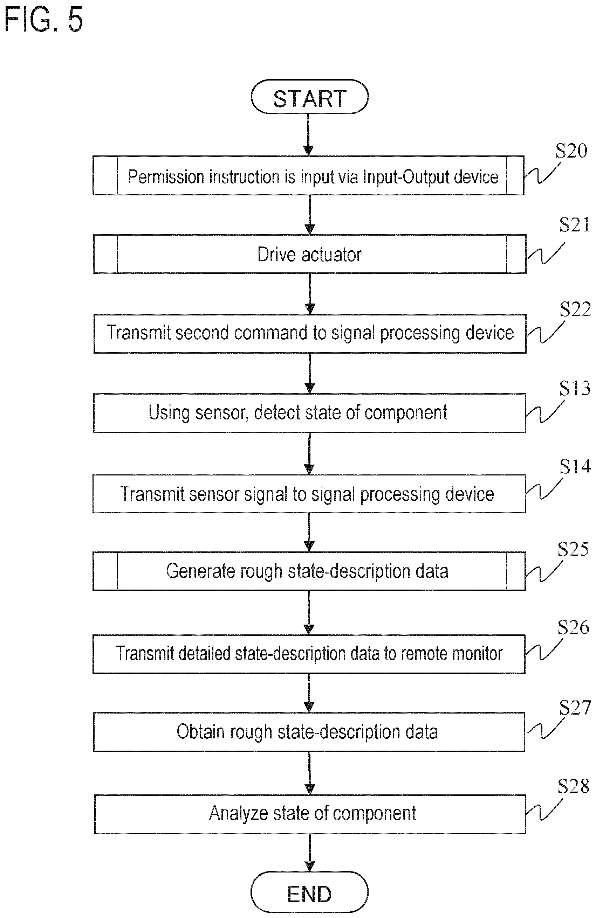

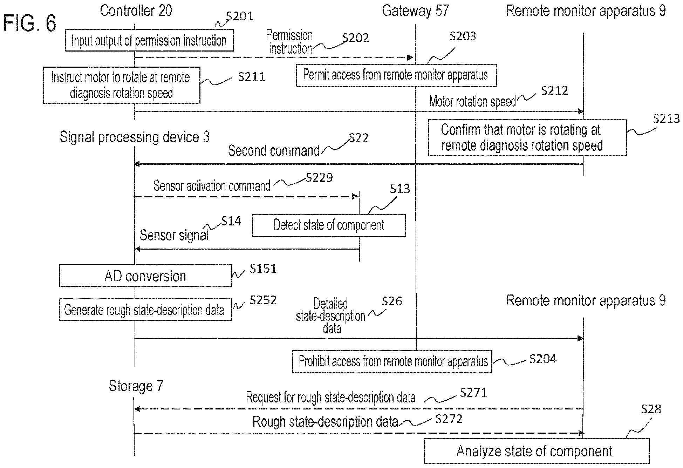

In the cases of (1) and (2), the operator facing the Input-Output device 17 after step S17 illustrated in FIG. 4 makes a phone call to or otherwise contacts a person in charge of operating the remote monitor apparatus 9. For this purpose, the result of the rough diagnosis is output on the Input-Output device 17. This is advantageous for smoothly taking a measure. In the case of (3), an accident is likely to occur during machining work with the operator facing the Input-Output device 17. In this case as well, the operator being aware of the accident makes a phone call to or otherwise contacts the person in charge of operating the remote monitor apparatus 9. After the contact, detailed diagnosis processing is performed, which is illustrated using a flowchart in FIG. 5. Also, a sequence diagram of the detailed diagnosis processing performed after the contact is illustrated in FIG. 6. In FIGs. 5 and 6, processings common to the rough diagnosis method and the detailed diagnosis method are designated with like reference numerals and will not be elaborated upon here.

First, at step S20, a permission instruction is input via the Input-Output device 17 to permit detailed state-description data to be output to the remote monitor apparatus 9. Usually, the gateway 57 is performing control of prohibiting access from the remote monitor apparatus 9. However, upon execution of the security program 29, the controller 20 inputs a permission instruction to the gateway 57. Upon input of the permission instruction, the gateway 57 permits access from the remote monitor apparatus 9 until one of the following events (1) to (4) occurs.

(1) The operator who is executing the security program 29 inputs, via the Input-Output device 17, a non-permission instruction to not permit the communication between the signal processing device 3 and the remote monitor apparatus 9, and the signal processing device 3 receives the non-permission instruction.
(2) The communication between the signal processing device 3 and the remote monitor apparatus 9 has timed out.
(3) The signal processing device 3 receives an end instruction to end the detailed diagnosis from the remote monitor apparatus 9.
(4) In a case where the signal processing device 3 only digitizes the signal from the sensor 14 using the AD converter 31 to obtain digital data and transmits the digital data to the remote monitor apparatus 9, the signal processing device 3 finishes transmitting all the digital data.

To describe step S20 more specifically, the operator activates the security program 29 via the Input-Output device 17 at step S201 of FIG. 6 to input the output of the permission instruction. At step S202, the security program 29 performs processing of transmitting the permission instruction to the gateway 57. That is, the controller 20 transmits the permission instruction to the gateway 57. After receiving the permission instruction, the gateway 57 permits access from the remote monitor apparatus 9 (step S203) until any one of the events (1) to (4) occurs (step S204).

At step S21, based on the input from the Input-Output device 17 of the machine tool 1, the controller 20 drives the actuator ACT of the machine tool 1 to change the state of the component COM. Specifically, the operator calls the control program 24 to transmit an instruction to the motor 15 to control the motor 15 to rotate at the rotation speed notified from the person in charge or the rotation speed notified at step S17 illustrated in FIGs. 3 and 4 (step S211). In the following description, this rotation speed will be referred to as remote diagnosis rotation speed. The controller 20 obtains a motor rotation speed at this moment from the encoder 16 and transmits the motor rotation speed to the remote monitor apparatus 9 (step S212). The remote monitor apparatus 9, by referring to the motor rotation speed transmitted from the controller 20, checks whether the motor 15 is rotating at the remote rotation speed (step S213).

After step S213, according to the invention, the the remote monitor apparatus 9 transmits a second command to the signal processing device 3. The second command instructs detailed state-description data to be generated based on the signal. The detailed state-description data is for identifying the abnormal part in the component COM and is more informative than the rough state-description data (step S22). The signal processing device 3 receives the second command for the time during which the permission instruction permits the detailed state-description data to be transmitted to the remote monitor apparatus 9. The signal processing device 3 is configured to receive the second command for the time during which the permission instruction permits the detailed state-description data to be transmitted to the remote monitor apparatus 9. The following (i) to (iv) are examples of the second command.

(i) A command for transmitting the digital signal data 35, which is obtained by digitizing the signal from the sensor 14.
(ii) A command for subjecting the digital data of (i) to envelope processing and fast Fourier transformation to obtain a frequency spectrum and transmitting a resulting frequency spectrum.
(iii) A command for obtaining a root mean square value (RMS value) of all the frequency components from the frequency spectrum of (ii) and transmitting the RMS value.
(iv) A command for obtaining frequency components of any one of particular frequencies $f_A$, $f_B$, and $f_C$ from the frequency spectrum of (ii) and transmitting any one of the frequency components.

The commands (i) to (iv) can also be implemented using the script described above by referring to FIG. 4. For example, in (i), the second command can be implemented by a script that reads the output value of the "getData" function illustrated in FIG. 4 into the "sendData" function. In (ii), the second command can be implemented by a script that reads the output value of "getFFT" illustrated in FIG. 4 into the "sendData" function. In (iii), the second command can be implemented by a script that reads the output value of the "getRMScalue" function illustrated in FIG. 4 into the "sendData" function. In (iv), the second command can be implemented by a script that reads the output value of any one of the functions "getFrequencyData (fft, fa)", "getFrequencyData (fft, fb)", and "getFrequencyData (fft, fc)" illustrated in FIG. 4 into the "sendData" function. It is to be noted that these scripts are examples of the second command and that the second command may be implemented by any other method such as a binary code method. It is also to be noted that the second command may include a command other than the commands (i) to (iv).

Upon the signal processing device 3 receiving the second command, the signal processing device 3 performs, using the script engine 37, the processing described in the second command. Then, by a method similar to the rough diagnosis method, the signal processing device 3 transmits a sensor activation command to the sensor 14 (step S229). It is to be noted that step S229 may be omitted in a case where the sensor 14 continually outputs a sensor signal to the signal processing device 3, irrespective of the presence and absence of a sensor activation command. After the end of step S14, the signal processing device 3 generates rough state-description data based on the sensor signal. The rough state-description data is relevant to an occurrence of an abnormality in the component COM (step S25). Specifically, the signal processing device 3 performs an AD conversion (step S151) and generates detailed state-description data based on the signal (step S252). Specifically, upon receipt of the second command, the signal processing device 3 generates detailed state-description data based on the signal from the sensor 14. The detailed state-description data is for identifying an abnormal part in the component COM and is more informative than the rough state-description data.

Specifically, in a case where the second command is a command such as (i), the signal processing device 3 generates, as the detailed state-description data, digital data obtained by digitizing the signal from the sensor 14. In a case where the second command is a command such as (ii), the signal processing device 3 generates the frequency spectrum as the detailed state-description data. In a case where the second command is a command such as (iii), the signal processing device 3 generates the root mean square value as the detailed state-description data. In a case where the second command is a command such as (iv), the signal processing device 3 generates, as the detailed state-description data, the frequency components of any one of the particular frequencies $f_A$, $f_B$, and $f_C$. It is to be noted that in a case where the second command is a command such as (i), (ii), or (iv), the detailed state-description data includes a plurality of factors relevant to an abnormality in the component COM (for example, frequency components of any one of the particular frequencies $f_A$, $f_B$, and $f_C$) such that the plurality of factors are identifiable.

At step S26, the signal processing device 3 transmits the generated detailed state-description data to the remote monitor apparatus 9. More specifically, while the detailed state-description data is permitted by the permission instruction to be transmitted to the remote monitor apparatus 9, the signal processing device 3 transmits the generated detailed state-description data to the remote monitor apparatus 9. While the detailed state-description data is permitted by the permission instruction to be transmitted to the remote monitor apparatus 9, the signal processing device 3 is configured to transmit the generated detailed state-description data to the remote monitor apparatus 9. At step S27, when the remote monitor apparatus 9 analyzes detailed state-description data, the remote monitor apparatus 9 obtains the rough state-description data from the storage 7. Specifically, at step S271, the remote monitor apparatus 9 transmits a request message requesting the rough state-description data. This request message at least includes information (such as ID) for identifying the component COM and information specifying the period of time of the rough state-description data, which is the data to be transmitted. At step S272, the storage 7 transmits the rough state-description data specified by the request message to the remote monitor apparatus 9. It is to be noted that step S27 (steps S 271 and S 272) may be omitted. At step S28, the remote monitor apparatus 9 analyzes the state of the component COM using the received detailed state-description data and rough state-description data.

<Effects of This Embodiment>

In the machine tool 1, the diagnosis system 100, and the diagnosis method for the machine tool 1 according to this embodiment, sensor signal processing for abnormality diagnosis purposes is performed separately at the signal processing device 3, which is different from the controller 20. This ensures that rough abnormality diagnosis processing in the machine tool 1 and detailed abnormality diagnosis processing performed for the machine tool by a remote diagnosis device are both realized while preventing the load on the controller 20 from being significantly heavy. Also, by employing a centralized configuration in which input operations for the operations of the machine tool 1 and notifications of rough abnormality diagnosis results are both performed in the machine tool 1, operator-friendliness of rough abnormality diagnosis improves.

<Modifications>

The rough diagnosis rotation speed, the factor identification information 26, the threshold information 28, and the rough diagnosis script 36 may be replaceable with other data from the remote monitor apparatus 9. The synthesis information 27 may be replaceable by the remote monitor apparatus 9 with a template of a script describing other synthesis information 27 (in the script illustrated in FIG. 4, information that includes codes excluding the factor identification information 26 and the threshold information 28). The factor identification information 26, the synthesis information 27, and the threshold information 28 may be combined into one piece of information. As an example of such one piece of information, it is possible to store the rough diagnosis script 36 itself in the memory 22. Also, the rough diagnosis program 25, rough diagnosis rotation speed, the factor identification information 26, the synthesis information 27, and the threshold information 28 may be stored in the memory 22 as one rough diagnosis program 25. The rough diagnosis script 36 may be transmitted from other than the controller 20 to the signal processing device 3 and installed therein.

In the above-described embodiment, the component COM is the bearing 13, which supports the spindle 11. The component COM, however, may be any other part. The components COM may also be a greater configuration unit. For example, the component COM may be the spindle 11. The network 5 may not necessarily be a wired network but may be a wireless network. The communication network 53 may be replaced with a dedicated line or a telephone line to the manufacturer. In the above-described embodiment, a predetermined value is used as the rough diagnosis rotation speed. Another possible example is that the operator inputs the rough diagnosis rotation speed from the Input-Output device 17, and the rough diagnosis program 25 performs processing of generating the first command.

In the above-described embodiment, the frequency components of the particular frequencies $f_A$, $f_B$, and $f_C$ are not factors susceptible to an abnormal engagement between the plurality of parts. The frequency components of the particular frequencies, however, may include factors susceptible to an abnormal engagement between the plurality of parts. An example is a case where a holder has a defect while the rolling element 13B of the bearing 13 is being held in the holder (in a case where the rolling element 13B is making an orbital rotation about the rotation axis of the motor 15 while being displaced from the intended position of the rolling element 13B). In this case, the frequency component of the following frequency $f_D$ is susceptible to the defect. The plurality of factors relevant to an abnormality in the component COM may include the frequency component of the frequency $f_D$ as a factor susceptible to an abnormal engagement between the plurality of parts. $f_D = (No/120) \cdot (1-d \cdot \cos\alpha/D)$ (4)

At least one or all of the functions of the control program 24, the rough diagnosis program 25, and the security program 29 may be implemented by a dedicated processor and/or an integrated circuit. The control program 24, the rough diagnosis program 25, and the security program 29 may not necessarily be stored in the memory 22, which is incorporated in to the controller 20; these programs may be recorded in a storage medium removable from the controller 20 and readable into the controller 20. Examples of the storage medium include: a disc such as a floppy disc (diskette), an optical disc, a CD-ROM, and a magnetic disc; an SD card; a USB memory; and an external hard disc. It is to be noted that the controller 20 is an example of the computer.

In the present application, the term "comprise" and its variations are intended to mean open-ended terms, not excluding any other elements and/or components that are not recited herein. The same applies to the terms "include", "have", and their variations.

Also in the present application, a component suffixed with a term such as "member", "portion", "part", "element", "body", and "structure" is intended to mean that there is a single such component or a plurality of such components.

Also in the present application, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

In the present application, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

Also in the present application, the phrase "at least one of A and B" is intended to be interpreted as "only A", "only B", or "both A and B".

Obviously, numerous modifications and variations of the present invention are possible in light of the above teachings. It is therefore to be understood that within the scope of the appended claims, the present invention may be practiced otherwise than as specifically described herein.

## Claims

1. A diagnosis system (100) for a machine tool (1), comprising:

   a component (13) that is variable in state based on an operation of an actuator (15) of the machine tool (1);
   a sensor (14) configured to detect the state of the component (13);
   a controller (20) configured to control the operation of the actuator (15);
   an Input-Output device (17) configured to receive an instruction for the controller (20) to control the actuator (15) to conduct the operation, and configured to notify an operation status of the actuator (15);
   a signal processing device (3) configured to process a signal from the sensor (14);

a remote monitor apparatus (9) configured to analyze the state of the component (13);

a communication network (53) connecting the remote monitor apparatus (9) and the signal processing device (3) to each other; and

a gateway (57) provided between the remote monitor apparatus (9) and the signal processing device (3) on the communication network (53);

wherein the signal processing device (3) is configured to:

based on the signal, generate rough state-description data relevant to an occurrence of an abnormality in the component (13), wherein the rough state-description data comprises information indicating that an abnormality is occurring in the component (13);

transmit the generated rough state-description data to the controller (20);

based on the signal, generate detailed state-description data that is for identifying an abnormal part in the component (13) and that comprises additional information compared to that of the rough state-description data; and

transmit the generated detailed state-description data to the remote monitor apparatus (9) that is configured to analyze the state of the component (13), and

wherein based on the rough state-description data transmitted to the controller (20), the Input-Output device (17) is configured to notify an operator of whether the abnormality is occurring in the component (13),

wherein the remote monitor apparatus (9) is configured to transmit a second command to the signal processing device (3) to control the signal processing device (3) to generate the detailed state-description data based on the signal,

wherein the second command comprises information specifying at least one piece of data that is associated with the abnormality in the component (13) and that is generatable from the signal, and

wherein the signal processing device (3) is configured to:

generate, based on the signal, the at least one piece of data specified by the second command;

generate the detailed state-description data comprising the at least one piece of data such that the at least one piece of data is identifiable; and

transmit the generated detailed state-description data to the remote monitor apparatus (9).

2. The diagnosis system (100) according to claim 1, wherein the information specifying the at least one piece of data selectively comprises

information specifying a frequency spectrum obtained by performing envelope processing and fast Fourier transformation on digital data obtained by digitizing the signal from the sensor (14),

information specifying a root mean square value of all frequency components obtained from the frequency spectrum, and

information specifying a particular frequency obtained from the frequency spectrum.

3. The diagnosis system (100) according to claim 1,

wherein the controller (20) is configured to transmit a first command to the signal processing device (3) to control the signal processing device (3) to generate the rough state-description data based on the signal, and

wherein the signal processing device (3) is configured to generate the rough state-description data upon receipt of the first command, and configured to transmit the generated rough state-description data to the controller (20).

4. The diagnosis system (100) according to claim 1, further comprising a communication line (51) connecting the controller (20) and the signal processing device (3) to each other,

wherein the gateway (57) is provided between the signal processing device (3) and the remote monitor apparatus (9),

wherein the first command and the rough state-description data are transmitted via the communication line (51),

wherein the second command and the detailed state-description data are transmitted via the communication network (53), and

wherein communication capacity of the communication line (51) is smaller than communication capacity of the communication network (53).

5. The diagnosis system (100) according to any one of claims 3 or 4, wherein the first command comprises at least one of:

a program code for generating the rough state-description data based on the signal; and

an execution command to execute the program code transmitted from the controller (20) to the signal processing device (3) and stored in the signal processing device (3).

**6.** The diagnosis system (100) according to claim 5,

wherein the program code comprises

component identification information (26) for identifying a plurality of frequency components of the signal from the sensor (14), the plurality of frequency components being relevant to the abnormality in the component (13), and

synthesis information (27) specifying a synthesis method of synthesizing at least two frequency components of the plurality of frequency components are synthesized with each other, and

wherein upon execution of the program code, the signal processing device (3) is configured to extract the plurality of frequency components from the signal, and configured to synthesize the at least two frequency components with each other according to the synthesis method to obtain a synthesis value.

**7.** The diagnosis system (100) according to claim 6, wherein the rough state-description data comprises the synthesis value.

**8.** The diagnosis system (100) according to any one of claims 6 or 7,

wherein the program code comprises a threshold for determining the abnormality in the component (13),

wherein upon execution of the program code, the signal processing device (3) is configured to, based on the plurality of frequency components and the threshold, determine whether the abnormality is occurring in the component (13), and

wherein the rough state-description data comprises information indicating whether the abnormality is occurring in the component (13).

**9.** The diagnosis system (100) according to any one of claims 6 to 8,

wherein the component (13) comprises a plurality of parts,

wherein the abnormality comprises a plurality of defects including a damage to the plurality of parts and an abnormal engagement between the plurality of parts, and

wherein each of the plurality of defects is indicated by at least one of the plurality of frequency components.

**10.** The diagnosis system (100) according to claim 9

wherein the plurality of parts comprise an inner ring (13A), an outer ring (13C), and a rolling element (13B) of a bearing provided in the component (13),

wherein the sensor (14) comprises a vibration sensor configured to detect a vibration of the bearing,

wherein the plurality of frequency components comprise

a component that corresponds to a first frequency (fA) of the signal from the vibration sensor and that is susceptible to a damage to the inner ring (13A),

a component that corresponds to a second frequency (fC) of the signal from the vibration sensor and that is susceptible to a damage to the outer ring (13C), and

a component that corresponds to a third frequency (fB) of the signal from the vibration sensor and that is susceptible to a damage to the rolling element (13B), and

wherein the component identification information comprises information identifying the first frequency (fA), the second frequency (fC), and the third frequency (fB).

**11.** The diagnosis system (100) according to any of claims 1 to 4,

wherein a permission instruction is input to the machine tool (1) via the Input-Output device (17) to permit the detailed state-description data to be output to the remote monitor apparatus (9), and

wherein while the detailed state-description data is permitted by the permission instruction to be transmitted to the remote monitor apparatus (9), the signal processing device (3) is configured to receive the second command and transmit the detailed state-description data to the remote monitor apparatus (9).

**12.** The diagnosis system (100) according to any of claims 1 to 11, further comprising a storage (7) accessible by the remote monitor apparatus (9) via the communication network (53),

wherein the controller (20) is configured to transmit the rough state-description data to the storage (7),

wherein the storage (7) is configured to store sets of the rough state-description data for each of a plurality of the components (13) such that the sets of the rough state-description data are searchable on a time-series basis, and

wherein the remote monitor apparatus (9) is configured to obtain the rough state-description data from the storage (7) when the remote monitor apparatus (9) analyzes the detailed state-description data.

13. A method of diagnosing a machine tool (1), the method comprising:

driving an actuator (15) of the machine tool (1) based on an input via an Input-Output device (17) of the machine tool (1) to change a state of a component (13) of the machine tool (1);
detecting the state of the component (13) by a sensor (14);
transmitting, to a signal processing device (3) of the machine tool (1), a signal indicating the state detected by the sensor (14);
generating, based on the signal and using the signal processing device (3), rough state-description data relevant to an occurrence of an abnormality in the component (13) by the signal processing device (3), wherein the rough state-description data comprises information indicating that an abnormality is occurring in the component (13);
transmitting the generated rough state-description data to a controller (20) that is configured to control an operation of the actuator (15);
generating, based on the signal and using the signal processing device (3), detailed state-description data that is for identifying an abnormal part in the component (13) and that comprises additional information compared to that of the rough state-description data based on the signal by the signal processing device (3);
transmitting the generated detailed state-description data to a remote monitor apparatus (9) that is configured to analyze the state of the component (13); and
notifying, via the Input-Output device (17) and based on the rough state-description data transmitted to the controller (20), an operator of whether the abnormality is occurring in the component (13),

transmitting, by using the remote monitor apparatus (9), a second command to the signal processing device (3) to control the signal processing device (3) to generate the detailed state-description data based on the signal, the second command comprising information specifying at least one piece of data that is associated with the abnormality in the component (13) and that is generatable from the signal; and
generating, by using the signal processing device (3), based on the signal, the at least one piece of data specified by the second command,

generating, by using the signal processing device (3), the detailed state-description data comprising the at least one piece of data such that the at least one piece of data is identifiable, and
transmitting, by using the signal processing device (3), the generated detailed state-description data to the remote monitor apparatus (9).

14. The method according to claim 13, wherein the information specifying the at least one piece of data selectively comprises

information specifying a frequency spectrum obtained by performing envelope processing and fast Fourier transformation on digital data obtained by digitizing the signal from the sensor (14),
information specifying a root mean square value of all frequency components obtained from the frequency spectrum, and
information specifying a particular frequency obtained from the frequency spectrum.

**Patentansprüche**

1. Diagnosesystem (100) für eine Werkzeugmaschine (1), das umfasst:

ein Bauelement (13), das in einem Zustand auf der Grundlage eines Betriebs einer Betätigungseinrichtung (15) der Werkzeugmaschine (1) variabel ist;
einen Sensor (14), der konfiguriert ist, den Zustand des Bauelements (13) zu erfassen;
eine Steuerungseinrichtung (20), die konfiguriert ist, einen Betrieb der Betätigungseinrichtung (15) zu steuern;
eine Eingabe-Ausgabe-Vorrichtung (17), die konfiguriert ist, eine Anweisung für die Steuerungseinrichtung (20) zu empfangen, um die Betätigungseinrichtung (15) zu steuern, den Betrieb durchzuführen, und konfiguriert ist, einen Betriebsstatus der Betätigungseinrichtung (15) zu melden;
eine Signalverarbeitungsvorrichtung (3), die konfiguriert ist, ein Signal von dem Sensor (14) zu verarbeiten;
eine Fernsteuerungsüberwachungsvorrichtung (9), die konfiguriert ist, den Zustand des Bauelements (13) zu analysieren;
ein Kommunikationsnetzwerk (53), das die Fernsteuerungsüberwachungsvorrichtung (9) und die Signalverarbeitungsvorrichtung (3) miteinander verbindet;

ein Gateway (57), das zwischen der Fernsteuerungsüberwachungsvorrichtung (9) und der Signalverarbeitungsvorrichtung (3) bei dem Kommunikationsnetzwerk (53) bereitgestellt ist; wobei die Signalverarbeitungsvorrichtung (3) konfiguriert ist:

auf der Grundlage des Signals Grobzustandsbeschreibungsdaten zu erzeugen, die hinsichtlich eines Auftretens einer Anomalie in dem Bauelement (13) relevant sind, wobei die Grobzustandsbeschreibungsdaten Informationen umfassen, die angeben, dass eine Anomalie in dem Bauelement (13) auftritt;

die erzeugten Grobzustandsbeschreibungsdaten zu der Steuerungseinrichtung (20) zu übertragen;

auf der Grundlage des Signals Detailzustandsbeschreibungsdaten zu erzeugen, die zur Identifikation eines anormalen Teils des Bauelements (13) dienen und die zusätzliche Informationen im Vergleich zu denen der Grobzustandsbeschreibungsdaten umfassen; und

die erzeugten Detailzustandsbeschreibungsdaten zu der Fernsteuerungsüberwachungsvorrichtung (9) zu übertragen, die konfiguriert ist, den Zustand des Bauelements (13) zu analysieren, und

wobei auf der Grundlage der Grobzustandsbeschreibungsdaten, die zu der Steuerungseinrichtung (20) übertragen werden, die Eingabe-Ausgabe-Vorrichtung (17) konfiguriert ist, eine Bedienungsperson darüber zu benachrichtigen, ob die Anomalie in dem Bauelement (13) auftrifft,

wobei die Fernsteuerungsüberwachungsvorrichtung (9) konfiguriert ist, einen zweiten Befehl zu der Signalverarbeitungsvorrichtung (3) zu übertragen, um die Signalverarbeitungsvorrichtung (3) zu steuern, die Detailzustandsbeschreibungsdaten auf der Grundlage des Signals zu erzeugen,

wobei der zweite Befehl Informationen umfasst, die zumindest ein Datenstück spezifizieren, das mit der Anomalie in dem Bauelement (13) verbunden ist und das aus dem Signal erzeugbar ist, und

wobei die Signalverarbeitungsvorrichtung (3) konfiguriert ist:

auf der Grundlage des Signals zumindest ein Datenstück, das durch den zweiten Befehl spezifiziert wird, zu erzeugen;

die Detailzustandsbeschreibungsdaten, die das zumindest eine Datenstück umfassen, derart zu erzeugen, dass das zumindest eine Datenstück identifizierbar ist;

die erzeugten Detailzustandsbeschreibungsdaten zu der Fernsteuerungsüberwachungsvorrichtung (9) zu übertragen.

2. Diagnosesystem (100) nach Anspruch 1, wobei die Informationen, die das zumindest eine Datenstück spezifizieren,

Informationen, die ein Frequenzspektrum spezifizieren, das erhalten wird, indem eine Hüllkurvenverarbeitung und eine schnelle Fourier-Transformation bei digitalen Daten, die erhalten werden, indem das Signal von dem Sensor (14) digitalisiert wird, ausgeführt werden,

Informationen, die einen quadratischen Mittelwert aller Frequenzkomponenten spezifizieren, die aus dem Frequenzspektrum erhalten werden, und

Informationen, die eine bestimmte Frequenz spezifizieren, die aus dem Frequenzspektrum erhalten wird, selektiv umfassen.

3. Diagnosesystem (100) nach Anspruch 1,

wobei die Steuerungseinrichtung (20) konfiguriert ist, einen ersten Befehl zu der Signalverarbeitungsvorrichtung (3) zu übertragen, um die Signalverarbeitungsvorrichtung (3) zu steuern, die Grobzustandsbeschreibungsdaten auf der Grundlage des Signals zu erzeugen, und

wobei die Signalverarbeitungsvorrichtung (3) konfiguriert ist, die Grobzustandsbeschreibungsdaten bei einem Empfang des ersten Befehls zu erzeugen, und konfiguriert ist, die erzeugten Grobzustandsbeschreibungsdaten zu der Steuerungseinrichtung (20) zu übertragen.

4. Diagnosesystem (100) nach Anspruch 1, ferner mit einer Kommunikationsleitung (51), die die Steuerungseinrichtung (20) und die Signalverarbeitungsvorrichtung (3) miteinander verbindet,

wobei das Gateway (57) zwischen der Signalverarbeitungsvorrichtung (3) und der Fernsteuerungsüberwachungsvorrichtung (9) bereitgestellt ist,

wobei der erste Befehl und die Grobzustandsbeschreibungsdaten über die Kommunikationsleitung (51) übertragen werden,

wobei der zweite Befehl und die Detailzustandsbeschreibungsdaten über das Kommunikationsnetzwerk (53) übertragen werden und

wobei eine Kommunikationskapazität der Kommunikationsleitung (51) kleiner ist als eine Kommunikationskapazität des Kommunikationsnetzwerks (53).

**5.** Diagnosesystem (100) nach einem der Ansprüche 3 oder 4, wobei der erste Befehl zumindest eines umfasst aus:

einem Programmcode zum Erzeugen der Grobzustandsbeschreibungsdaten auf der Grundlage des Signals; und
einem Ausführungsbefehl, um den Programmcode, der von der Steuerungseinrichtung (20) zu der Signalverarbeitungsvorrichtung (3) übertragen wird und in der Signalverarbeitungsvorrichtung (3) gespeichert wird, auszuführen.

**6.** Diagnosesystem (100) nach Anspruch 5,

wobei der Programmcode umfasst:

Komponentenidentifikationsinformationen (26) zum Identifizieren einer Vielzahl von Frequenzkomponenten des Signals von dem Sensor (14), wobei die Vielzahl von Frequenzkomponenten für die Anomalie in dem Bauteil (13) relevant sind, und Syntheseinformationen (27), die ein Syntheseverfahren zum Synthetisieren von zumindest zwei Frequenzkomponenten der Vielzahl von Frequenzkomponenten, die miteinander synthetisiert werden, spezifizieren, und

wobei bei einer Ausführung des Programmcodes die Signalverarbeitungsvorrichtung (3) konfiguriert ist, die Vielzahl von Frequenzkomponenten aus dem Signal zu extrahieren, und konfiguriert ist die zumindest zwei Frequenzkomponenten miteinander entsprechend dem Syntheseverfahren zu synthetisieren, um einen Synthesewert zu erhalten.

**7.** Diagnosesystem (100) nach Anspruch 6, wobei die Grobzustandsbeschreibungsdaten den Synthesewert umfassen.

**8.** Diagnosesystem (100) nach einem der Ansprüche 6 oder 7,

wobei der Programmcode einen Schwellenwert zum Bestimmen der Anomalie in dem Bauteil (13) umfasst,
wobei bei einer Ausführung des Programmcodes die Signalverarbeitungsvorrichtung (3) konfiguriert ist, auf der Grundlage der Vielzahl von Frequenzkomponenten und des Schwellenwerts zu bestimmen, ob die Anomalie in dem Bauteil (13) auftritt, und
wobei die Grobzustandsbeschreibungsdaten Informationen umfassen, die angeben, ob die Anomalie in dem Bauteil (13) auftritt.

**9.** Diagnosesystem (100) nach einem der Ansprüche 6 bis 8,

wobei das Bauteil (13) eine Vielzahl von Teilen umfasst,
wobei die Anomalie eine Vielzahl von Defekten umfasst, die eine Beschädigung bei der Vielzahl von Teilen und einen anormalen Eingriff zwischen der Vielzahl von Teilen umfassen, und
wobei jeder der Vielzahl von Defekten durch zumindest eine der Vielzahl von Frequenzkomponenten angezeigt wird.

**10.** Diagnosesystem (100) nach Anspruch 9,

wobei die Vielzahl von Teilen einen inneren Ring (13A), einen äußeren Ring (13C) und ein Rollelement (13B) eines Lagers umfasst, das in dem Bauteil (13) bereitgestellt ist,
wobei der Sensor (14) einen Vibrationssensor umfasst, der konfiguriert ist, eine Vibration des Lagers zu erfassen,
wobei die Vielzahl von Frequenzkomponenten umfasst:

eine Komponente, die einer ersten Frequenz (fA) des Signals von dem Vibrationssensor entspricht und die für eine Beschädigung bei dem inneren Ring (13A) empfindlich ist,
eine Komponente, die einer zweiten Frequenz (fC) des Signals von dem Vibrationssensor entspricht und die für eine Beschädigung bei dem äußeren Ring (13C) empfindlich ist, und
eine Komponente, die einer dritten Frequenz (fB) des Signals von dem Vibrationssensor entspricht und die für eine Beschädigung bei dem Rollelement (13B) empfindlich ist, und

wobei die Komponentenidentifikationsinformationen Informationen umfassen, die die erste Frequenz (fA), die zweite Frequenz (fC) und die dritte Frequenz (fB) identifizieren.

**11.** Diagnosesystem (100) nach einem der Ansprüche 1 bis 4,

wobei eine Erlaubnisanweisung in die Werkzeugmaschine (1) über die Eingabe-Ausgabe-Vorrichtung (17) eingegeben wird, um zu erlauben, dass die Detailzustandsbeschreibungsdaten zu der Fernsteuerungsüberwachungsvorrichtung (9) ausgegeben werden, und
wobei, während durch die Erlaubnisanweisung erlaubt wird, dass die Detailzustandsbeschreibungsdaten zu der Fernsteuerungsüberwachungsvorrichtung (9) übertragen werden, die Signalverarbeitungsvorrichtung (3) konfiguriert ist, den zweiten Befehl zu empfangen und die Detailzustandsbeschreibungsdaten zu der Fernsteuerungsüberwachungsvorrichtung (9) zu übertragen.

12. Diagnosesystem (100) nach einem der Ansprüche 1 bis 11, ferner mit einem Speicher (7), auf den durch die Fernsteuerungsüberwachungsvorrichtung (9) über das Kommunikationsnetzwerk (53) Zugriff genommen werden kann,

   wobei die Steuerungseinrichtung (20) konfiguriert ist, die Grobzustandsbeschreibungsdaten zu dem Speicher (7) zu übertragen,
   wobei der Speicher (7) konfiguriert ist, Sätze der Grobzustandsbeschreibungsdaten für jedes einer Vielzahl der Bauelemente (13) derart zu speichern, dass die Sätze der Grobzustandsbeschreibungsdaten auf einer Zeitabfolgebasis durchsuchbar sind, und
   wobei die Fernsteuerungsüberwachungsvorrichtung (9) konfiguriert ist, die Grobzustandsbeschreibungsdaten von dem Speicher (7) zu erhalten, wenn die Fernsteuerungsüberwachungsvorrichtung (9) die Detailzustandsbeschreibungsdaten analysiert.

13. Verfahren zum Diagnostizieren einer Werkzeugmaschine (1), wobei das Verfahren umfasst:

   ein Ansteuern einer Bestätigungseinrichtung (15) der Werkzeugmaschine (1) auf der Grundlage einer Eingabe über eine Eingabe-Ausgabe-Vorrichtung (17) der Werkzeugmaschine (1), um einen Zustand eines Bauelements (13) der Werkzeugmaschine (1) zu ändern;
   ein Erfassen des Zustands des Bauelements (13) durch einen Sensor (14);
   ein Übertragen eines Signals, das den Zustand, der durch den Sensor (14) erfasst wird, angibt, zu einer Signalverarbeitungsvorrichtung (3) der Werkzeugmaschine (1);
   ein Erzeugen von Grobzustandsbeschreibungsdaten, die für ein Auftreten einer Anomalie in dem Bauelement (13) relevant sind, auf der Grundlage des Signals und unter Verwendung der Signalverarbeitungsvorrichtung (3) durch die Signalverarbeitungsvorrichtung (3), wobei die Grobzustandsbeschreibungsdaten Informationen umfassen, die angeben, dass eine Anomalie in dem Bauelement (13) auftritt;
   ein Übertragen der erzeugten Grobzustandsbeschreibungsdaten zu einer Steuerungseinrichtung (20), die konfiguriert ist, einen Betrieb der Betätigungseinrichtung (15) zu steuern;
   ein Erzeugen, auf der Grundlage des Signals und unter Verwendung der Signalverarbeitungsvorrichtung (3), von Detailzustandsbeschreibungsdaten, die für ein Identifizieren eines anormalen Teils in dem Bauelement (13) dienen und die zusätzliche Informationen im Vergleich zu denen der Grobzustandsbeschreibungsdaten umfassen, auf der Grundlage des Signals durch die Signalverarbeitungsvorrichtung (3);
ein Übertragen der erzeugten Detailzustandsbeschreibungsdaten zu einer Fernsteuerungsüberwachungsvorrichtung (9), die konfiguriert ist, den Zustand des Bauelements (13) zu analysieren;
ein Benachrichtigen, über die Eingabe-Ausgabe-Vorrichtung (17) und auf der Grundlage der Grobzustandsbeschreibungsdaten, die zu der Steuerungseinrichtung (20) übertragen werden, einer Bedienungsperson darüber, ob die Anomalie in dem Bauelement (13) auftritt,
ein Übertragen, unter Verwendung der Fernsteuerungsüberwachungsvorrichtung (9), eines zweiten Befehls zu der Signalverarbeitungsvorrichtung (3), um die Signalverarbeitungsvorrichtung (3) zu steuern, die Detailzustandsbeschreibungsdaten auf der Grundlage des Signals zu erzeugen, wobei der zweite Befehl Informationen umfasst, die zumindest ein Datenstück spezifizieren, das mit der Anomalie in dem Bauelement (13) verbunden ist und das aus dem Signal erzeugbar ist; und
ein Erzeugen, unter Verwendung der Signalverarbeitungsvorrichtung (3), des zumindest einen Datenstücks, das durch den zweiten Befehl spezifiziert wird, auf der Grundlage des Signals,
ein Erzeugen, unter Verwendung der Signalverarbeitungsvorrichtung (3), der Detailzustandsbeschreibungsdaten, die das zumindest eine Datenstück umfassen, sodass das zumindest eine Datenstück identifizierbar ist, und
ein Übertragen, unter Verwendung der Signalverarbeitungsvorrichtung (3), der erzeugten Detailzustandsbeschreibungsdaten zu der Fernsteuerungsüberwachungsvorrichtung (9).

14. Verfahren nach Anspruch 13, wobei die Informationen, die das zumindest eine Datenstück spezifizieren,

   Informationen, die ein Frequenzspektrum spezifizieren, das erhalten wird, indem eine Hüllkurvenverarbeitung und eine schnelle Fourier-Transformation bei digitalen Daten, die erhalten werden, indem das Signal von dem Sensor (14) digitalisiert wird, ausgeführt werden,
   Informationen, die einen quadratischen Mittelwert aller Frequenzkomponenten spezifizieren, die aus dem Frequenzspektrum erhalten werden, und
Informationen, die eine bestimmte Frequenz spezifizieren, die aus dem Frequenzspektrum erhalten wird, selektiv umfassen.

## Revendications

1. Système de diagnostic (100) pour une machine-outil (1), comprenant :

   un composant (13) dont l'état est variable en fonction d'une opération d'un actionneur (15) de la machine-outil (1) ;
   un capteur (14) conçu pour détecter l'état du composant (13) ;
   un contrôleur (20) conçu pour contrôler l'opération de l'actionneur (15) ;
   un dispositif d'entrée-sortie (17) conçu pour recevoir une instruction pour que le contrôleur (20) contrôle l'actionneur (15) pour conduire l'opération, et conçu pour signaler un statut d'opération de l'actionneur (15) ;
   un dispositif de traitement du signal (3) conçu pour traiter un signal provenant du capteur (14) ;
   un appareil de surveillance à distance (9) conçu pour analyser l'état du composant (13) ;
   un réseau de communication (53) connectant l'appareil de surveillance à distance (9) et le dispositif de traitement du signal (3) l'un à l'autre ; et
   une passerelle (57) disposée entre l'appareil de surveillance à distance (9) et le dispositif de traitement du signal (3) sur le réseau de communication (53) ;
   dans lequel le dispositif de traitement du signal (3) est conçu pour :

   en fonction du signal, générer des données grossières de description d'état relatives à l'apparition d'une anomalie dans le composant (13), les données grossières de description d'état comprenant des informations indiquant qu'une anomalie est apparue dans le composant (13) ;
   transmettre les données grossières de description d'état générées au contrôleur (20) ;
   en fonction du signal, générer des données détaillées de description d'état qui servent à identifier une pièce anormale dans le composant (13) et qui comprennent des informations supplémentaires par rapport à celles des données grossières de description d'état ; et
   transmettre les données détaillées de description d'état générées à l'appareil de surveillance à distance (9) qui est conçu pour analyser l'état du composant (13), et
   dans lequel, en fonction des données grossières de description d'état transmises au contrôleur (20), le dispositif d'entrée-sortie (17) est conçu pour signaler à un opérateur que l'anomalie est apparue dans le composant (13),
dans lequel l'appareil de surveillance à distance (9) est conçu pour transmettre une deuxième commande au dispositif de traitement du signal (3) pour contrôler le dispositif de traitement du signal (3) pour générer les données détaillées de description d'état en fonction du signal,
dans lequel la deuxième commande comprend des informations spécifiant au moins une donnée qui est associée à l'anomalie dans le composant (13) et qui peut être générée à partir du signal, et
dans lequel le dispositif de traitement du signal (3) est conçu pour :

   générer, en fonction du signal, l'au moins une donnée spécifiée par la deuxième commande ;
   générer les données détaillées de description d'état comprenant l'au moins une donnée de telle sorte que l'au moins une donnée soit identifiable ; et
   transmettre les données détaillées de description d'état générées à l'appareil de surveillance à distance (9).

2. Système de diagnostic (100) selon la revendication 1, dans lequel les informations spécifiant l'au moins une donnée comprennent sélectivement

   des informations spécifiant un spectre de fréquences obtenu par réalisation d'un traitement d'enveloppe et d'une transformée de Fourier rapide sur des données numériques obtenues par numérisation du signal provenant du capteur (14),
   des informations spécifiant une valeur moyenne quadratique de toutes les composantes de fréquence obtenues à partir du spectre de fréquences, et
   des informations spécifiant une fréquence particulière obtenue à partir du spectre de fréquences.

3. Système de diagnostic (100) selon la revendication 1,

   dans lequel le contrôleur (20) est conçu pour transmettre une première commande au dispositif de traitement du signal (3) pour contrôler le dispositif de traitement du signal (3) pour générer les données grossières de description d'état en fonction du signal, et

dans lequel le dispositif de traitement du signal (3) est conçu pour générer les données grossières de description d'état lors de la réception de la première commande, et conçu pour transmettre les données grossières de description d'état générées au contrôleur (20).

4. Système de diagnostic (100) selon la revendication 1, comprenant en outre une ligne de communication (51) connectant le contrôleur (20) et le dispositif de traitement du signal (3) l'un à l'autre,

dans lequel la passerelle (57) est disposée entre le dispositif de traitement du signal (3) et l'appareil de surveillance à distance (9),

dans lequel la première commande et les données grossières de description d'état sont transmises par le biais de la ligne de communication (51),

dans lequel la deuxième commande et les données détaillées de description d'état sont transmises par le biais du réseau de communication (53), et

dans lequel la capacité de communication de la ligne de communication (51) est inférieure à la capacité de communication du réseau de communication (53).

5. Système de diagnostic (100) selon l'une quelconque des revendications 3 et 4, dans lequel la première commande comprend au moins un élément parmi :

un code de programme destiné à générer les données grossières de description d'état en fonction du signal ; et

une commande d'exécution pour exécuter le code de programme transmis depuis le contrôleur (20) au dispositif de traitement du signal (3) et stocké dans le dispositif de traitement du signal (3).

6. Système de diagnostic (100) selon la revendication 5,

dans lequel le code de programme comprend des informations d'identification de composantes (26) destinées à identifier une pluralité de composantes de fréquence du signal provenant du capteur (14), la pluralité de composantes de fréquence se rapportant à l'anomalie dans le composant (13), et

des informations de synthèse (27) spécifiant un procédé de synthèse consistant à synthétiser au moins deux composantes de fréquence de la pluralité de composantes de fréquence sont synthétisées l'une avec l'autre, et

dans lequel, lors de l'exécution du code de programme, le dispositif de traitement du signal (3) est conçu pour extraire la pluralité de composantes de fréquence du signal, et conçu pour synthétiser les au moins deux composantes de fréquence l'une avec l'autre selon le procédé de synthèse pour obtenir une valeur de synthèse.

7. Système de diagnostic (100) selon la revendication 6, dans lequel les données grossières de description d'état comprennent la valeur de synthèse.

8. Système de diagnostic (100) selon l'une quelconque des revendications 6 et 7,

dans lequel le code de programme comprend un seuil destiné à déterminer l'anomalie dans le composant (13),

dans lequel, lors de l'exécution du code de programme, le dispositif de traitement du signal (3) est conçu pour, en fonction de la pluralité de composantes de fréquence et du seuil, déterminer si l'anomalie est apparue dans le composant (13), et

dans lequel les données grossières de description d'état comprennent des informations indiquant si l'anomalie est apparue dans le composant (13).

9. Système de diagnostic (100) selon l'une quelconque des revendications 6 à 8,

dans lequel le composant (13) comprend une pluralité de pièces,

dans lequel l'anomalie comprend une pluralité de défauts incluant un endommagement de la pluralité de pièces et une mise en prise anormale entre la pluralité de pièces, et

dans lequel chacun de la pluralité de défauts est indiqué par au moins une de la pluralité de composantes de fréquence.

10. Système de diagnostic (100) selon la revendication 9

dans lequel la pluralité de pièces comprend une bague interne (13A), une bague externe (13C) et un élément roulant (13B) d'un roulement disposé dans le composant (13),

dans lequel le capteur (14) comprend un capteur de vibrations conçu pour détecter une vibration du roulement,

dans lequel la pluralité de composantes de fréquence comprend

une composante qui correspond à une première fréquence (fA) du signal provenant du capteur de vibrations et qui est sensible à un endommagement de la bague interne (13A),

une composante qui correspond à une deuxième fréquence (fC) du signal provenant du capteur de vibrations et qui est sensible à un endommagement de la bague externe (13C), et une composante qui correspond à une troisième fréquence (fB) du signal provenant du capteur de vibrations et qui est sensible à un endommagement de l'élément roulant (13B), et dans lequel les informations d'identification de composantes comprennent des informations identifiant la première fréquence (fA), la deuxième fréquence (fC) et la troisième fréquence (fB).

11. Système de diagnostic (100) selon l'une quelconque des revendications 1 à 4,

dans lequel une instruction d'autorisation est entrée dans la machine-outil (1) par le biais du dispositif d'entrée-sortie (17) pour autoriser la délivrance des données détaillées de description d'état à l'appareil de surveillance à distance (9), et

dans lequel, pendant que la transmission des données détaillées de description d'état à l'appareil de surveillance à distance (9) est autorisée par l'instruction d'autorisation, le dispositif de traitement du signal (3) est conçu pour recevoir la deuxième commande et transmettre les données détaillées de description d'état à l'appareil de surveillance à distance (9).

12. Système de diagnostic (100) selon l'une quelconque des revendications 1 à 11, comprenant en outre un dispositif de stockage (7) accessible à l'appareil de surveillance à distance (9) par le biais du réseau de communication (53),

dans lequel le contrôleur (20) est conçu pour transmettre les données grossières de description d'état au dispositif de stockage (7),

dans lequel le dispositif de stockage (7) est conçu pour stocker des ensembles des données grossières de description d'état pour chacun d'une pluralité des composants (13) de telle sorte que les ensembles des données grossières de description d'état sont consultables sous la forme d'une série chronologique, et

dans lequel l'appareil de surveillance à distance (9) est conçu pour obtenir les données grossières de description d'état depuis le dispositif de stockage (7) quand l'appareil de surveillance à distance (9) analyse les données détaillées de description d'état.

13. Procédé de diagnostic d'une machine-outil (1), le procédé comprenant :

l'entraînement d'un actionneur (15) de la machine-outil (1) en fonction d'une entrée par le biais d'un dispositif d'entrée-sortie (17) de la machine-outil (1) pour changer un état d'un composant (13) de la machine-outil (1) ;

la détection de l'état du composant (13) par un capteur (14) ;

la transmission, à un dispositif de traitement du signal (3) de la machine-outil (1), d'un signal indiquant l'état détecté par le capteur (14) ;

la génération, en fonction du signal et au moyen du dispositif de traitement du signal (3), de données grossières de description d'état relatives à l'apparition d'une anomalie dans le composant (13) par le dispositif de traitement du signal (3), les données grossières de description d'état comprenant des informations indiquant qu'une anomalie est apparue dans le composant (13) ;

la transmission des données grossières de description d'état générées à un contrôleur (20) qui est conçu pour contrôler une opération de l'actionneur (15) ;

la génération, en fonction du signal et au moyen du dispositif de traitement du signal (3), de données détaillées de description d'état qui servent à identifier une pièce anormale dans le composant (13) et qui comprennent des informations supplémentaires par rapport à celles des données grossières de description d'état en fonction du signal par le dispositif de traitement du signal (3) ;

la transmission des données détaillées de description d'état générées à un appareil de surveillance à distance (9) qui est conçu pour analyser l'état du composant (13) ; et

le signalement, par le biais du dispositif d'entrée-sortie (17) et en fonction des données grossières de description d'état transmises au contrôleur (20), à un opérateur que l'anomalie est apparue dans le composant (13),

la transmission, au moyen de l'appareil de surveillance à distance (9), d'une deuxième commande au dispositif de traitement du signal (3) pour contrôler le dispositif de traitement du signal (3) pour générer les données détaillées de description d'état en fonction du signal, la deuxième commande comprenant des informations spécifiant au moins une donnée qui est associée à l'anomalie dans le composant (13) et qui peut être générée à partir du signal ; et

la génération, au moyen du dispositif de traitement du signal (3), en fonction du signal, de l'au moins une donnée spécifiée par la deuxième commande,

la génération, au moyen du dispositif de traitement du signal (3), des données détaillées de description d'état comprenant l'au moins une donnée de telle sorte que l'au moins une donnée soit identifiable, et

la transmission, au moyen du dispositif de traitement du signal (3), des données détaillées de description d'état générées à l'appareil de surveillance à distance (9).

**14.** Procédé selon la revendication 13, dans lequel les informations spécifiant l'au moins une donnée comprennent sélectivement

des informations spécifiant un spectre de fréquences obtenu par réalisation d'un traitement d'enveloppe et d'une transformée de Fourier rapide sur des données numériques obtenues par numérisation du signal provenant du capteur (14),
des informations spécifiant une valeur moyenne quadratique de toutes les composantes de fréquence obtenues à partir du spectre de fréquences, et
des informations spécifiant une fréquence particulière obtenue à partir du spectre de fréquences.

FIG. 1

17 — Input-Output device

20 — Controller

23 — Communication I/F

21 — Processor

22

Memory

29 — Security program

25

26

27    28

Control program — 24

Encoder
16
15(ACT)
Motor
12

13
(COM)
13A
13B
13C

11

RB

14

1

5

51(55)

53

55    57    59

G/W

7

34    33

Communication I/F    Operation device

32

Memory

Script engine — 37

Rough diagnosis script — 36

Digital signal data — 35

31

AD converter

3

9

25: Rough diagnosis program
26: Component identification information
27: Synthesis information
28: Threshold information

100

27

# FIG. 2

START

| | |
|---|---|
| Drive actuator | S11 |

Transmit first command to signal processing device — S12

Using sensor, detect state of component — S13

Transmit sensor signal to signal procesing device — S14

| Generate rough state-description data | S15 |

Transmit rough state-description data to controller — S16

Notify operator — S17

Transmit rough state-description data to storage — S18

Store rough state-description data for each component such that rough state-description data is searchable on a time-series basis — S19

END

FIG. 3

Controller 20       Signal processing device 3       Sensor 14

Instruct motor to rotate at rough diagnosis rotation speed    S111

Confirm that motor is rotating at rough diagnosis rotation speed    S112

First command    S12
（RoughDiagnosis (No)）

Sensor activation command    S129

   S13
Detect state of component

   S14
Sensor signal

   S151
AD conversion

S16
   S152
Generate rough state-description data

Rough state-description data
(information indicating presence or absence of abnormality in component, and synthesis value)

Display, on Input-Output device, abnormality possibility in component and synthesis value    S17

   S18       Storage 7
Rough state-description data

   S19
Store rough state-description data for each component such that rough state-description data is searchable on a time-series basis

# FIG. 4

```
Function RoughDiagnosis(n0);
{
// Declare constants
const var th1 = <TH1 value>;
const var th2 = <TH2 value, but TH2>Th1>;

// Declare variables
var fa = <fA /No value> * n0;
var fb = <fB /No value> * n0;
var fc = <fc /No value > * n0;
var data = [];
var envelopedata = [];
var fftdata = [];
var sum, rsmvalue,
var level;

Data = getData (5.0);                        // Obtain sensor signal for 5 seconds
Envelopedata = getEnvelope (data);     // Envelope conversion
Fftdata= getFFT (envelopedata);            // Multiply envelopdata[] value by fft
Sum = getFrequencyData (fftdata, fa) + getFrequencyData (fftdata, fb) +
getFrequencyData (fftdata, fc);            // Sum frequency components of $F_A$, $F_B$, and $F_C$
Rsmvalue = getRMSvalue (fftdata, 0, MAX);   //Obtain root mean square value of all frequency components
If (sum < th1)
    level = <Determination value indicating no problem>;
else if (sum < th2)
    level = <Determination value indicating caution>;
else
    level = <Determination value indicating warning >;

 sendData ('level=' + level + ';rsm=' + rsmvalue);

return;
}
```

# FIG. 5

```
        ┌─────────────┐
        │    START    │
        └─────────────┘
               │
               ▼
┌──────────────────────────────────────────────┐
│ Permission instruction is input via Input-Output device │        S20
└──────────────────────────────────────────────┘
               │
               ▼
┌──────────────────────────────────────────────┐
│                 Drive actuator                 │        S21
└──────────────────────────────────────────────┘
               │
               ▼
┌──────────────────────────────────────────────┐
│  Transmit second command to signal processing device  │        S22
└──────────────────────────────────────────────┘
               │
               ▼
┌──────────────────────────────────────────────┐
│      Using sensor, detect state of component      │        S13
└──────────────────────────────────────────────┘
               │
               ▼
┌──────────────────────────────────────────────┐
│  Transmit sensor signal to signal processing device  │        S14
└──────────────────────────────────────────────┘
               │
               ▼
┌──────────────────────────────────────────────┐
│      Generate rough state-description data      │        S25
└──────────────────────────────────────────────┘
               │
               ▼
┌──────────────────────────────────────────────┐
│ Transmit detailed state-description data to remote monitor │        S26
└──────────────────────────────────────────────┘
               │
               ▼
┌──────────────────────────────────────────────┐
│       Obtain rough state-description data       │        S27
└──────────────────────────────────────────────┘
               │
               ▼
┌──────────────────────────────────────────────┐
│           Analyze state of component           │        S28
└──────────────────────────────────────────────┘
               │
               ▼
        ┌─────────────┐
        │     END     │
        └─────────────┘
```

FIG. 6

Controller 20      S201              Gateway 57      Remote monitor apparatus 9

| Input output of permission instruction |

Permission instruction    S202        S203

| Instruct motor to rotate at remote diagnosis rotation speed |    S211     | Permit access from remote monitor apparatus |

                                       Motor rotation speed    S212

Signal processing device 3                       S213

| Confirm that motor is rotating at remote diagnosis rotation speed |

Second command    S22

Sensor activation command    S229        S13

| Detect state of component |

Sensor signal    S14

| AD conversion |    S151

| Generate rough state-description data |    S252     Detailed state-description data    S26            Remote monitor apparatus 9

| Prohibit access from remote monitor apparatus |    S204

Storage 7          Request for rough state-description data    S271

                 Rough state-description data    S272          S28

| Analyze state of component |

# EP 4 283 418 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004 A
- JP 265009 A
- JP 2004265009 A
- JP 2006 A
- JP 234784 A

- JP 2006234784 A
- JP 2018 A
- JP 179735 A
- JP 63297813 A